# EUROPÄISCHE PATENTSCHRIFT

(11) **EP 2 614 175 B1**
(45) Veröffentlichungstag und Bekanntmachung des Hinweises auf die Patenterteilung: **03.01.2018**
(21) Anmeldenummer: 11758169.4
(22) Anmeldetag: 08.09.2011
(51) Int. Cl.: C23C 22/36, C23C 22/44, C09D 5/08

(54) **VERFAHREN ZUR BESCHICHTUNG VON METALLISCHEN OBERFLÄCHEN MIT EINEM POLYMER ENTHALTENDEN BESCHICHTUNGSMITTEL, DAS BESCHICHTUNGSMITTEL UND SEINE VERWENDUNG**
METHOD FOR COATING METALLIC SURFACES WITH A POLYMER-CONTAINING COATING AGENT, THE COATING AGENT AND USE THEREOF
PROCÉDÉ DE REVÊTEMENT DE SURFACES MÉTALLIQUES PAR UN AGENT DE REVÊTEMENT CONTENANT UN POLYMÈRE, AGENT DE REVÊTEMENT CORRESPONDANT ET SON UTILISATION

(30) Priorität: 10.09.2010 DE 102010040548
(43) Veröffentlichungstag der Anmeldung: 17.07.2013
(73) Patentinhaber: Chemetall GmbH, 60487 Frankfurt am Main (DE)
(72) Erfinder: KRÜGER, Mike, 10587 Berlin (DE); GRÜNBERG, Petra, 60528 Frankfurt am Main (DE); SCHNEIDER, Mark Andre, 61381 Friedrichsdorf-Burgholzhausen (DE); DOMES, Heribert, 35789 Weilmünster (DE)
(74) Vertreter: BASF IP Association
(86) Internationale Anmeldenummer: PCT/EP2011/065506
(87) Internationale Veröffentlichungsnummer: WO 2012/032102

(56) Entgegenhaltungen:
- EP-A1- 1 669 476
- EP-A1- 1 852 523
- WO-A1-2008/141666
- DE-A1-102008 000 600
- US-A1- 2010 068 513

## Beschreibung

Die Erfindung betrifft Verfahren zur Beschichtung von metallischen Oberflächen mit einer wässerigen Zusammensetzung, die sich von Phosphatierungslösungen unterscheidet, die eine kationische Polyurethan-reiche Dispersion mit einem Gehalt an Polycarbonat oder/und eine Dispersion auf Basis von Acrylat oder/und Styrol enthaltende Zusammensetzung sowie die Verwendung der nach dem erfindungsgemäßen Verfahren beschichteten metallischen Substrate.

DE 102008000600 A1 beschreibt Verfahren zur Beschichtung von metallischen Oberflächen mit einem Passivierungsmittel ohne konkrete Nennung eines Gehalts an bestimmten organischen Polymeren/Copolymeren, das Passivierungsmittel und seine Verwendung. Die Beispiele führen jedoch keine Gehalte an organischem Polymer/Copolymer an.

Im Folgenden werden die Begriffe "Passivierungsmittel", "Zusammensetzung" und "Passivierungsverfahren" für die wässerigen Zusammensetzungen und Verfahren der vorliegenden Anmeldung beibehalten, auch wenn diese vielfach nicht zu einer Passivierung, sondern zu Zwecken einer organischen Beschichtung wie z.B. einer organische Beschichtung, die wie ein sogenanntes "Dry Lube" bei Bedarf umgeformt werden kann, eingesetzt werden.

Phosphatüberzüge werden in großem Umfang als Korrosionsschutzschichten, als Umformhilfe sowie als Haftgrund für Lacke und andere Beschichtungen eingesetzt. Vor allem wenn sie als Schutzschicht für eine begrenzte Zeit insbesondere der Lagerung verwendet und dann z.B. lackiert werden, werden sie als Vorbehandlungsschicht vor dem Lackieren bezeichnet. Wenn auf den Phosphatüberzug jedoch keine Lackschicht und keine andersartige organische Beschichtung folgen, wird von Behandlung oder Passivierung anstelle von Vorbehandlung gesprochen. Diese Überzüge werden auch als Konversionsschichten bezeichnet, wenn mindestens ein Kation der metallischen Oberfläche, also der Oberfläche des Metallteils, herausgelöst und zum Schichtaufbau verwendet wird.

Unter den Beschichtungsverfahren ohne ein Nachspülen insbesondere nach einer Konversionsbeschichtung haben die sogenannten Auftrockenverfahren ("no-rinse-processes") vor allem für die sehr schnelle Beschichtung von kontinuierlich laufenden Bändern aus mindestens einem metallischen Werkstoff eine hohe Bedeutung. Diese Bänder können Bleche von geringer oder sehr großer Breite sein. Auf diese Bänder wird üblicherweise direkt nach der Verzinkung, gegebenenfalls aber auch nach geeigneter Reinigung oder Entfettung und nach Spülung mit Wasser oder einem wässerigen Medium sowie gegebenenfalls nach einer Aktivierung der metallischen Oberfläche ein Phosphatüberzug durch Benetzung mit einer Phosphatierungslösung aufgebracht und aufgetrocknet. Ein Spülen nach dem Auftrocknen des Phosphatüberzugs könnte diesen beeinträchtigen, insbesondere wenn der Phosphatüberzug nicht oder nur teilweise kristallin ist.

In der Vergangenheit wurden diese Probleme großtechnisch dadurch umgangen, dass der Phosphatierungslösung Nickel zugesetzt wurde, so dass diese meistens Nickel-Gehalte im Bereich von 0,5 bis 1,5 g/L aufwies. Bei der Zink-Mangan-Nickel-Phosphatierung wurden dabei meist Zink-Gehalte im Bereich von 0,6 bis 3,5 g/L und Mangan-Gehalte im Bereich von 0,4 bis 2,5 g/L gewählt.

Die hochwertigen Phosphatierungslösungen und Phosphatschichten weisen jedoch einen wesentlichen Gehalt an Zink, Mangan und Nickel auf. Insbesondere Nickel ist aufgrund seiner Giftigkeit und Schädlichkeit zu vermeiden. Darüber hinaus stören dabei die unvermeidbaren Schwermetall-Gehalte im Abwasser, im Phosphatschlamm und im Schleifstaub. Für die Behandlung von Bändern stehen jedoch keine Verfahren zur Verfügung, die insbesondere bei Zink-reichen metallischen Oberflächen einen hohen Blankkorrosionsschutz (Korrosionsschutz ohne Lack/Primer-Schichten) gewährleisten.

Trotz des vergleichsweise hohen Phosphatgehalts des unmodifizierten anorganischen Passivierungsmittels der DE 102008000600 A1 handelt es sich bei den Zusammensetzungen nicht um Phosphatierungslösungen und bei dem Beschichtungsverfahren nicht um ein Phosphatieren, da eine Phosphatierungslösung:
1. für hochwertige Phosphatschichten z.B. bei Zink- oder/und Mangan-reichen Phosphatierverfahren eine vorherige Aktivierung z.B. auf Basis von Titanphosphatpartikeln oder Zinkphosphatpartikeln benötigt, damit hierauf eine hochwertige Phosphatschicht ausgebildet werden kann,
2. in der Regel bei Zink-haltigen Phosphatierungen nur in einem pH-Wertbereich von 2 bis 3,5 eingesetzt werden kann,
3. üblicherweise keinen Gehalt an Titan- oder/und Zirkoniumverbindungen von insgesamt mehr als 0,05 oder mehr als 0,1 g/L ohne Störungen verkraftet, da Titan- und Zirkoniumverbindungen zum Phosphatieren als Badgifte bekannt sind,
4. in der Praxis nie einen wesentlichen Gehalt an Silanen/Silanolen/Siloxanen/Polysiloxanen enthält,
5. selten einen geringen Gehalt an einem Komplexbildner enthält, denn dieser wird teilweise als Badgift angesehen,
6. üblicherweise in Badlösungen einen Gesamtgehalt an Kationen im Bereich von 3,5 bis 9,5 g/L und an Phosphor-haltigen Verbindungen im Bereich von 5 bis 20 g/L berechnet als PO₄ enthält,
7. oft einen erhöhten Gehalt an Alkali- und Ammoniumverbindungen enthält, wobei der pH-Wert auch bei vergleichsweise hohen Gehalten an Ammoniumverbindungen im Bereich von 2,0 bis 3,5 bleibt,
8. bei einem Gehalt an mindestens einem Komplexfluorid normalerweise nur Verbindungen auf Basis von Bor- oder/und Siliciumkomplexfluorid enthält,
9. beim Phosphatieren von Teilen mit einer Zink- oder/und Mangan-reichen Phosphatierungslösung zumindest bei der Behandlung von Einzelteilen z.B. durch Tauchen oder/und Spritzen üblicherweise kristalline Schichten von oft typischen Kristallformen gebildet werden und
10. beim Blankkorrosionsschutz die kristallinen zinkphosphatierten Oberflächen einen Salzsprühtest an phosphatierten, nicht mit Lack behandelten Oberflächen von typischerweise nur bis zu zwei Stunden ohne Rostbildung aufgrund der Poren und mangelnden Geschlossenheit zeigen, während die erfindungsgemäßen Beschichtungen üblicherweise mindestens zwei Tage ohne zusätzliche Lackbehandlung im Salzsprühtest beständig sind, ohne dass die erfindungsgemäßen Beschichtungen dicker sind als die vergleichbaren phosphatierten Beschichtungen.

Falls in sehr seltenen Fällen bei einem Phosphatierverfahren eine Titan- oder/und Zirkoniumverbindung in einer Phosphatierungslösung verwendet wird, sind die Gehalte an diesen Verbindungen typischerweise insgesamt unter 0,2 g/L. Denn es ist bekannt, dass höhere Gehalte an diesen Verbindungen üblicherweise zu Beschichtungsstörungen insbesondere auf Aluminium-reichen Oberflächen führen. Nur sehr selten wird/werden ein Komplexbildner oder/und ein organisches Polymer/Copolymer einer Phosphatierungslösung zugesetzt. Falls in sehr seltenen Fällen bei einem Phosphatierverfahren ein Silan in einer Phosphatierungslösung verwendet wird, sind die Gehalte sehr gering. Aber eine Kombination dieser genannten Zusätze wird beim Phosphatieren nie eingesetzt.

Es wurde immer wieder festgestellt, dass das Verhalten der unmodifizierten (= keine organischen Polymere oder/und Copolymere enthaltende wässerige Zusammensetzung, die über Wochen stabil bleibt) wässerigen anorganischen Zusammensetzungen der DE 102008000600 A1 und die Eigenschaften ihrer Beschichtungen im Vergleich zu Phosphatierungslösungen und deren Phosphatschichten so unterschiedlich sind, dass bei den erfindungsgemäßen wässerigen Zusammensetzungen und ihren Beschichtungsverfahren nicht von einem Phosphatieren gesprochen werden kann. Dennoch kann es sich bei dem erfindungsgemäßen Verfahren um ein Konversionsbeschichtungsverfahren der 1. Art handeln.

Die Patentanmeldungen zu chemisch ähnlichen Passivierungsmitteln und Passivierungsverfahren DE 102008000600.9 und PCT/EP2009/052767 sowie die entsprechenden Auslandsanmeldungen werden hiermit ausdrücklich einbezogen, insbesondere bezüglich der wässerigen Zusammensetzungen, der Zusätze zu den wässerigen Zusammensetzungen, der Schritte beim Beschichten, dem Badverhalten, der Schichtausbildung, der Schichteigenschaften und den ermittelten Wirkungen, vor allem bei den Ausführungsbeispielen und Vergleichsbeispielen. In gleicher Weise werden auch die die Priorität begründenden Anmeldungen in die Nachanmeldungen ausdrücklich einbezogen.

US 2010/068513 A1 lehrt die Oberflächenbehandlung von Stahlblech mit Zusammensetzungen auf Basis von Magnesiumverbindung, Titanverbindung, kationischem Urethanharz und kationischem Phenolpolykondensat.

Bei Passivierungsmitteln ohne einen Gehalt an hochwertigen organischen Polymeren/Copolymeren wird jedoch häufig nach Applikation und Trocknung kein ausreichend Feuchtigkeits-resistenter Trockenfilm ausgebildet. Insbesondere unmittelbar nach der Trocknung ist die Resistenz gegen Feuchtigkeit für eine große Zahl von Anwendungen der behandelten Substratoberflächen nicht ausreichend.

Durch die Auswahl und den Zusatz eines geeigneten Polymersystems kann dieses Problem gelöst werden. Zusätzlich lässt sich dadurch die Korrosionsbeständigkeit der behandelten Substratoberflächen deutlich erhöhen, die Weiterverarbeitung zu umgeformten Teilen ohne zusätzliche Schmiermittel wie z.B. ohne Fette und ohne Öle verbessern und die Überlackierbarkeit mit diversen Beschichtungssystemen deutlich verbessern.

Es wurde gefunden, dass fast alle der organischen Polymere und Copolymere, die in das Passivierungsmittel der DE 102008000600 A1 eingemischt werden können, zu Ausfällungen insbesondere von Polymerpartikeln führen, so dass das modifizierte Passivierungsmittel nicht mehr verwendet werden kann. Denn die weitaus meisten der üblicherweise heute eingesetzten Polymere und Copolymere sind nicht in stark sauren Dispersionen, Emulsionen oder/und Lösungen stabil. Solche Ausfällungen führen zu nicht ausreichend verfilmbaren bzw. nicht ausreichend verfilmten inhomogenen Trockenfilmen. Die Filme zeigen daher andere und schlechtere Eigenschaften als gut verfilmte Filme. Sie sind daher oft auch nicht mehr transparent, obwohl für viele Anwendungen transparente Filme benötigt werden. Es hat sich dabei gezeigt, dass alle getesteten Arten an unmodifizierten anionischen organischen Polymeren/Copolymeren im sauren Medium instabil sind und daher nicht erfindungsgemäß einsetzbar sind. Auch unter den kationischen organischen Polymeren/Copolymeren haben sich im sauren Medium viele als instabil erwiesen.

Überraschend wurde jetzt gefunden, dass eine erfindungsgemäß modifizierte stabile Zusammensetzung es ermöglicht, dass die Oberflächenästhetik des Substrats nahezu unverändert erkennbar bleiben kann. Hierdurch kann beispielsweise die Kornstruktur durch die erfindungsgemäße Beschichtung gut gesehen werden.

Es wurde jetzt ferner gefunden, dass organische Polymere und Copolymere, die in das Passivierungsmittel der DE 102008000600 A1 eingemischt werden und dabei nicht zu Ausfällungen führen, die Eigenschaften der hierbei gebildeten Beschichtung im Vergleich zu den Eigenschaften der organischen Polymer und Copolymer-freien Beschichtung wesentlich verbessern. Es wurde jetzt auch gefunden, dass einzelne ausgewählte organische Polymere und Copolymere die Eigenschaften und das Eigenschaftsspektrum so erheblich verbessern, dass die Einsatzmöglichkeiten der hiermit beschichteten Substrate wesentlich erweitert werden.

Es wurde überraschend festgestellt, dass ein vergleichsweise geringer Zusatz einer kationischen Polyurethan-reichen Dispersion mit einem Gehalt an Polycarbonat oder/und an einer säuretoleranten Dispersion auf Basis von Acrylat oder/und Styrol, die in der wässerigen Zusammensetzung stabil vorliegen, zu einem deutlich besseren und andersartigen Eigenschaftsspektrum führt als ein unmodifiziertes Passivierungsmittel nur auf Basis der Komponenten a) bis d), wie es schematisch aus den Figuren 1 und 2 ersichtlich ist. Für diese Figuren wurden jedoch nicht die Element- und Verbindungsgehalte selektiv zueinander in Beziehung gesetzt, sondern die Verhältnisse von anorganischem Passivierungsmittel zu Polymeren/Copolymeren mit deren Additiven wie z.B. Wachs. Die dort gezeigten Trends sind jedoch von der spezifischen Zusammensetzung und von der Schichtdicke abhängig.

Besonders hochwertige Ergebnisse zeigten sich durch Zusatz einer kationischen Polyurethandispersion im Vergleich zu einem unmodifizierten Passivierungsmittel nur auf Basis der Komponenten a) bis d) beim Salzsprühtest nach DIN EN ISO 9227, beim Schwitzwasser Konstant-Klima-Test nach DIN EN ISO 6270-2 CH, bei den Antifingerprint-Eigenschaften, die durch Eintauchen der behandelten Substratoberflächen in eine synthetische Handschweißlösung mit entsprechender Auswertung durch Farbmessung im Vergleich zur nicht belasteten Probe geprüft werden, bei der Überlackierbarkeit, beim Gleitverhalten, beim Wet-Stack-Test (einem der Korrosionstests) sowie bei der Beständigkeit gegen Reinigungsmittel, Kühlmittel, Äthanol und deionisiertes Wasser.

Als Passivieren im Sinne dieser Patentanmeldung wird das Belegen der Substratoberfläche mit speziellen anorganischen oder/und organischen Zusammensetzungen verstanden, die in Trockenfilmen von oft weniger als 1 g/m² aufgebracht werden können, die insbesondere die Oxidation der Substratoberfläche verhindern. Oft, aber nicht immer, wird keine nachfolgende organische Beschichtung zum dauerhaften Schutz vor Korrosion aufgebracht, weil die Korrosionsbeständigkeit der Passivierungsbeschichtung in vielen Fällen nur von temporärer Natur ist, die für Lagerung, Transport oder Weiterverarbeitung der mit dem Passivierungsmittel beschichteten Komponente ausreicht. Das Passivieren schließt jedoch in manchen Fällen nicht aus, dass nachträglich doch mindestens eine organische Beschichtung wie z.B. ein Primer oder sogar ein Lacksystem oder/und ein Klebstoff aufgebracht wird/werden.

Es bestand daher die Aufgabe, ein Beschichtungsverfahren vorzuschlagen, mit dem die mit einer wässerigen Zusammensetzung erzeugte Korrosionsschutzschicht insbesondere auch ohne nachträgliche Beschichtung mit einem Lack/Primer einen guten Korrosionsschutz (= Blankkorrosionsschutz) insbesondere auf einem metallischen Band aufweist. Denn ein Coil (Bandspule) soll üblicherweise vom Stahlhersteller beim weiter verarbeitenden Betrieb ohne Rostansätze verarbeitet werden können. Daneben ist/sind für manche Ausführungsformen eine gute Umformbarkeit oder/und auch eine gute Alkalibeständigkeit beim mildalkalischen Reinigen oder/und beim Umformen mit alkalischen oder/und sauren Kühlschmiermitteln vorteilhaft. Gegebenenfalls soll die Beschichtung auch möglichst nach dem Umformen einen guten Korrosionsschutz und möglichst auch eine gute Lackhaftung aufweisen. Des Weiteren soll die Schicht sogenannte Antifingerprint-Eigenschaften aufweisen.

Die Aufgabe wird gelöst mit einem Verfahren zum Beschichten von metallischen Oberflächen mit einer wässerigen Zusammensetzung mit einem pH-Wert im Bereich von 1 bis 4, die
a) mindestens 1 g/L an Phosphat berechnet als PO₄,
b) mindestens 0,1 g/L an mindestens einer Titan- oder/und ZirkoniumVerbindung berechnet als Ti-Metall,
c) mindestens 0,1 g/L an mindestens einem Komplexbildner,
d) mindestens 0,5 g/L an Kationen von Aluminium, Chrom(III) oder/ und Zink oder/und an mindestens einer Verbindung mit einem Gehalt an Aluminium, Chrom(III) oder/und Zink sowie
e) 1 bis 500 g/L an einer kationischen Polyurethan-reichen Dispersion mit einem Gehalt an Polycarbonat oder/und an einer Dispersion auf Basis von Acrylat oder/und Styrol
enthält, bei dem die Zusammensetzung ein Gewichtsverhältnis an organischen Polymeren/Copolymeren e) mit dem anorganischen Passivierungsmittel auf Basis von a) bis d) im Bereich von 8 : 1 bis 0,2 : 1 aufweist, bei dem in der wässerigen Zusammensetzung keine Ausfällungen auftreten und bei dem die Beschichtung nach dem Auftragen verfilmt wird.

Kationische und nichtionische organische Polymere/Copolymere sind von Natur aus säuretolerant. Anionische Polymere/Copolymere können beispielsweise durch Zusatz des Salzes einer starken Säure so modifiziert werden, dass sie säuretolerant zu werden. Das säuretolerante, kationische oder nichtionische organische Polymer/Copolymer liegt im (gesamten) Gemisch e) oder/und in der wässerigen Zusammensetzung jeweils als Dispersion vor. Das mindestens eine säuretolerante, kationische oder nichtionische organische Polymer/Copolymer ist vorzugsweise in der wässerigen Zusammensetzung im sauren oder/und neutralen pH-Wertbereich über mindestens fünf Tage stabil. Vorteilhafterweise sind sämtliche organischen Polymere/Copolymere im stark sauren oder gegebenenfalls auch im schwach sauren oder/und im neutralen pH-Wertbereich stabil, insbesondere bei einem pH-Wert im Bereich von 1 bis 6 oder von 2 bis 5 oder von 3 bis 4. Jeder Zusatz kann hierbei kationisch, nichtionisch oder säuretolerant anionisch sein.

Hierbei kann vorzugsweise ein Nassfilm der wässerigen Zusammensetzung auf metallischen Bändern oder Blechen aufgebracht und aufgetrocknet werden.

Wirkstoffe im Sinne dieser Anmeldung bezeichnen die Gehalte an Substanzen einschließlich Lösemitteln und Ionen, die an chemischen Reaktionen in der wässerigen Zusammensetzung und an chemischen Reaktionen zur Ausbildung des getrockneten und gegebenenfalls auch teilweise oder vollständig ausgehärteten Überzugs beteiligt sind.

Ein einzelner Zusatz zu e), ein Gemisch einzelner Zusätze zu e) oder/und das (gesamte) Gemisch e) kann/können a) eine Mindestfilmbildungstemperatur MFT vorzugsweise im Bereich von -20 bis +100 °C, im Bereich von 0 bis +80 °C oder im Bereich von +20 bis +60 °C oder der hieraus gebildete Film kann b) eine Transformationstemperatur T_{g} vorzugsweise im Bereich von -10 bis +120 °C, im Bereich von +10 bis +100 °C oder im Bereich von +30 bis +80 °C oder/und c) eine Pendelhärte nach König vorzugsweise im Bereich von 10 bis 140 s, im Bereich von 30 bis 120 s oder im Bereich von 50 bis 100 s aufweisen. Vorzugsweise weist das organische Polymer/Copolymer e) eine Mindestfilmbildungstemperatur MFT im Bereich von - 20 bis +100 °C oder der hieraus gebildete Film eine Transformationstemperatur T_{g} im Bereich von -10 bis +120 °C oder/und eine Pendelhärte nach König im Bereich von 10 bis 140 s auf.

Der Begriff "Zusatz" bzw. "zusetzen" im Sinne dieser Anmeldung bedeutet, dass mindestens einmal ein solcher Stoff oder ein solches Stoffgemisch absichtlich zugesetzt wird.

Der Gehalt der wässerigen Zusammensetzung an mindestens einem säuretoleranten, kationischen oder nichtionischen organischen Polymer/Copolymer e) bezogen auf den Gehalt der Fest- und Wirkstoffe dieser Zusätze liegt vorzugsweise im Bereich von 8 bis 400 g/L, von 15 bis 320 g/L, von 25 bis 280 g/L, von 40 bis 240 g/L, von 60 bis 200 g/L, von 80 bis 180 g/L, von 100 bis 160 g/L oder von 120 bis 140 g/L.

Die erfindungsgemäß hergestellten Filme sind üblicherweise transparente, trockene oder zumindest angetrocknete und ölfreie anorganisch-organische Beschichtungen mit einer Schichtdicke vorzugsweise im Bereich von 0,1 bis 20 µm oder von 1 bis 10 µm Dicke und selten von 0,1 bis 50 µm Dicke. Sie zeigen exzellenten Korrosionsschutz insbesondere während des Transportierens, Lagerns und der Weiterbehandlung. Sie bilden meistens einen Trockenfilm mit Gleiteigenschaften, mit der das erfindungsgemäß behandelte Substrat ohne nachträgliche Beschichtung mit weiteren Gleitmitteln zu geformten Komponenten verarbeitet und z.B. umgeformt werden kann. Sie sind meistens gut witterungsbeständig und beständig gegen mildalkalische Reinigungsprozesse. Sie können als Vorbehandlung vor einer weiteren Lackierung oder Beschichtung mit organischen Zusammensetzungen wie z.B. einem Klebstoff eingesetzt werden. Wenn z.B. bei Temperaturen im Bereich von 60 bis 120 °C peak metal temperature = PMT getrocknet wird, kann bei den erfindungsgemäß eingesetzten niedrighärtenden Harzen z.B. auf der Basis eines kationischen Polyurethanharzes gegebenenfalls auf eine getrennte Temperaturbehandlung zum Härten verzichtet werden. Durch Zusatz von Härtern, Vernetzern, Polymerisationsinitiatoren usw. wie z.B. auf Basis von Aziridin, Melaminformaldehydharz und blockiertem Isocyanat kann insbesondere die Beständigkeit des getrockneten Filmes gegen diverse Chemikalien wie z.B. gegen Alkohole, Ketone und sauer oder alkalisch reagierenden Medien verbessert werden. Die Zugabe von Melaminformaldehydharz oder/und blockiertem Isocyanat setzt jedoch in den meisten Fällen eine Trocknung oder/und zusätzliche Erwärmung bei einer PMT von größer als 120 °C voraus.

Die erfindungsgemäßen Zusammensetzungen stellen ein organisch-anorganisches Hybrid-System dar. Sie haben gleichzeitig die Eigenschaften eines sauren Passivierungsmittels und eines Primers.

Es können vorzugsweise Gewichts-bezogene Verhältnisse [a) bis d)] : [e) + f)] im Bereich von 20 : 1 bis 1 : 30, insbesondere im Bereich von 10 : 1 bis 1 : 20, besonders bevorzugt im Bereich von 6 : 1 bis 1 : 10 oder von 4 : 1 bis 1 : 8 und ganz besonders bevorzugt im Bereich von 2 : 1 bis 1 : 6, von 1,5 : 1 bis 1 : 4 oder von 1 : 1 bis 1 : 3, vor allem etwa von ungefähr 1 : 2, eingestellt werden, insbesondere für die wässerigen Zusammensetzungen und für die daraus hergestellten Trockenfilme.

Vorzugsweise weist die erfindungsgemäße wässerige Zusammensetzung ein Gewichtsverhältnis an organischen Polymeren/Copolymeren e) mit dem anorganischen Passivierungsmittel auf Basis von a) bis d) im Bereich von 6 : 1 bis 0,8 : 1 auf. Vor allem bevorzugt für die wässerigen Zusammensetzungen und für die daraus hergestellten Trockenfilme ist ein Gewichtsverhältnis der säuretoleranten, kationischen oder/und nichtionischen Polymere/Copolymere e) mit dem anorganischen Passivierungsmittel auf Basis von a) bis d) im Bereich von 5 : 1 bis 0,3 : 1, insbesonders bevorzugt im Bereich von 3,5 : 1 bis 0,8 : 1 oder von 2,5 : 1 bis 1,2 : 1. Die organischen Polymere/Copolymere e) sind vorzugsweise Copolymere.

Vorzugsweise sind in das Skelett oder/und in Seitenketten des kationischen Polyurethanharzes hydrophile kationische Gruppen über mindestens ein Amin, insbesondere über mindestens ein Alkanolamin wie z.B. ein N-Alkyldialkanolamin, eingebaut. Vorzugsweise sind in die Hauptkette des kationischen Polyurethanharzes der kationisches Polyurethanharzes quaternäre Ammoniumgruppen eingebaut. Diese Gruppen können gegebenenfalls als anionische Gegenionen Säuregruppen oder/und Gruppen von Quaternierungsmitteln aufweisen, die sich z.B. bilden, wenn beispielsweise Essigsäure oder/und Phosphorsäure als Säure oder/und beispielsweise Dibultylsulfat oder/und Benzylchlorid als Quaternierungsmittel eingesetzt werden. Vorzugsweise werden beim Zusatz von Säure oder/und Quaternierungsmittel zu der z.B. kationisches Polyurethanharz enthaltenden wässerigen Zusammensetzung anionische Gegenionen in die quaternären Ammoniumgruppen z.B. der Hauptkette des kationischen Polyurethanharzes eingebaut. Vorzugsweise sind in das kationische Polyurethanharz Struktureinheiten mit mindestens einer Silicium enthaltenden Gruppe oder/und mit mindestens einer Epoxidgruppe eingebaut. Vorzugsweise enthält das kationische Polyurethanharz Additive wie z.B. mindestens ein Konservierungsmittel, mindestens einen Emulgator, mindestens ein Metallsalz wie z.B. ein Magnesiumsalz oder/und mindestens ein organisches Lösemittel wie z.B. mindestens eines auf Basis von Pyrrolidon wie z.B. ein Polyvinylpyrrolidon oder/und N-Methylpyrrolidon. Möglicherweise ist die Verträglichkeit z.B. des kationisches Polyurethanharzes mit dem unmodifizierten anorganischen Passivierungsmittel zum einen im Vorhandensein von Aminogruppen in der Hauptkette und andererseits im Vorhandensein von Gegenionen wie z.B. PO₄³⁻ begründet.

Die Auswahl der jeweiligen organischen (co-)polymeren Bestandteile richtet sich auch nach den Eigenschaften der gewünschten Beschichtung. Falls eine gewisse Wasserlöslichkeit der hergestellten Beschichtung ausreicht, können nichtionische organische (Co-)Polymere für e) ausreichen. Falls besonders hochwertige Eigenschaften gewünscht werden, empfehlen sich insbesonders kationische organische (Co-)Polymere für e). Da diese jedoch oft besonders aufwändig herzustellen sind, sind sie oft auch teurer. Andererseits kann die Wasserlöslichkeit der erfindungsgemäßen Beschichtung auch durch Zusatz eines Vernetzers wie z.B. auf Basis Aziridin oder Diimid oder durch Zusatz eines Silans, Silanols, Siloxans oder/und Polysiloxans oder/und mit der Sol-Gel-Verbrückung von organischen polymeren oder/und anorganischen Partikeln sehr verringert werden.

Voraussetzung für die Verwendung z.B. eines kationisches Polyurethanharzes oder/und von anderen säuretoleranten, kationischen oder/und nichtionischen organischen Polymeren/Copolymeren in der wässerigen Zusammensetzung ist in vielen Ausführungsformen ihre Eignung bei vergleichsweise niedrigen pH-Werten wie z.B. bei einem pH-Wert im Bereich von 2 bis 3 sowie die Vermeidung von Ausfällungen in der wässerigen Zusammensetzung über mindestens fünf Tage oder 4 Wochen und möglichst mehrere Monate (Langzeitstabilität). Die Komplexbildner sind üblicherweise notwendig, um die anorganische Zubereitung als stabile Lösung einsetzen zu können. Vorzugsweise liegt der pH-Wert der erfindungsgemäßen wässerigen Zusammensetzungen im Bereich von 1,5 bis 4 oder von 2 bis 3,5. Denn aufgrund des Gehalts an Komplexbildner und gegebenenfalls weiterer Komponenten kann der pH-Wert in manchen Ausführungsformen auch in den schwach sauren Bereich gebracht werden.

Die erfindungsgemäße Beschichtung z.B. auf Basis von kationischem Polyurethanharz bietet vorzugsweise eine hohe Wasserbeständigkeit und eine hohe Haftung für die nachfolgende Beschichtung. Bei manchen Ausführungsvarianten ergeben sich diese hochwertigen Eigenschaften erst nach etwa einer Stunde oder nach etwa einem Tag Wartezeit nach dem Beschichten. Darüber hinaus ist es bevorzugt, dass diese Beschichtung eine für solche dünnen Beschichtungen vergleichsweise hohe mechanische Beständigkeit, eine hohe Transparenz oder eine Trübung, eine Aufnahmebereitschaft von Weißpigmenten oder/und Farbpigmenten, eine erhöhte Chemikalienbeständigkeit wie z.B. gegen organische Lösemittel, alkalische oder/und saure Chemikalien oder/und Wasser aufweist. Zur Herstellung von grauen oder schwarzen Beschichtungen hat sich ein Zusatz insbesondere von Ruß bewährt.

Darüber hinaus kann die erfindungsgemäße Zusammensetzung in vielen Ausführungsvarianten neben dem oder alternativ zu dem mindestens einen kationischen Polyurethanharz mindestens ein anderes säuretolerantes, kationisches oder nichtionisches stabiles organisches Polymer/Copolymer enthalten, wobei die Stabilität hierbei bedeutet, dass in der erfindungsgemäßen Zusammensetzung keine Ausfällungen über längere Zeit, insbesondere über mindestens 5 oder 20 Tage oder sogar über mindestens 4 Wochen, auftreten.

Meistens wird die erfindungsgemäße wässerige Zusammensetzung eine Dispersion oder kolloidale Lösung sein. Hierbei kann es auftreten, dass der Anteil der kationisches Polyurethanharzes und gegebenenfalls weiterer säuretoleranter Dispersionen, kolloidaler Lösungen und Pulver so gering im Vergleich zu den gelösten Bestandteilen ist, dass der Charakter der Dispersion kaum wahrzunehmen ist.

Vorzugsweise enthält die erfindungsgemäße Zusammensetzung mindestens ein Gleitmittel f). Vorzugsweise enthält die erfindungsgemäße Zusammensetzung mindestens ein Additiv g) wie z.B. jeweils mindestens ein Netzmittel, einen Demulgator, einen Emulgator, einen Entschäumer, ein Filmbildungshilfsmittel, einen Korrosionsinhibitor oder/und einen UV-Adsorber. Vorzugsweise werden solche Additive ausgewählt und dem Passivierungsmittel zugesetzt, die die Benetzung verbessern, die Schaumbildung begrenzen und die Verfilmung der Beschichtung ermöglichen. Vorzugsweise wird die Beschichtung nach dem Auftragen verfilmt, insbesondere während des Trocknens.

Bei dem erfindungsgemäßen Verfahren kann als **Gleitmittel f),** das teilweise auch als Umformmittel dienen kann, mindestens ein Wachs ausgewählt werden aus der Gruppe bestehend aus Paraffinen, Polyethylenen und Polypropylenen, das der wässerigen Zusammensetzung zugesetzt wird, insbesondere mindestens ein oxidiertes Wachs oder/und mindestens ein mikrokristallines Wachs. Vorzugsweise sind die Gleitmittel gänzlich oder im Wesentlichen frei von Halogenen wie z.B. Fluor. Es ist besonders vorteilhaft, das Wachs als wässerige oder/und als kationisch, anionisch oder/und sterisch stabilisierte Dispersion einzusetzen, weil es dann in der wässerigen Zusammensetzung leicht homogen verteilt gehalten werden kann. Der Schmelzpunkt des als Gleitmittel eingesetzten Wachses liegt bevorzugt im Bereich von 40 bis 165 °C, besonders bevorzugt im Bereich von 50 bis 160 °C, insbesondere im Bereich von 100 bis 165 °C oder im Bereich von 120 bis 150 °C.

Besonders bevorzugt ist der Zusatz von einem oxidierten Polyethylen mit einem Schmelzpunkt im Bereich von 100 bis 150 °C. Ein solches Gleitmittel kann beispielsweise in kationisch stabilisierter Form in Wasser vorliegen, kann jedoch zusätzlich Emulgator enthalten.

Besonders vorteilhaft ist es, zusätzlich zu einem Gleitmittel mit einem Schmelzpunkt im Bereich von 100 bis 165 °C ein Gleitmittel mit einem Schmelzpunkt im Bereich von 45 bis 95 °C zuzusetzen, insbesondere in Mengen von 2 bis 30 Gew.-%, vorzugsweise von 5 bis 20 Gew.-%, des Gesamtfeststoffgehalts, das heißt bezogen auf Feststoffe einschließlich Wirkstoffen, beispielsweise mindestens ein Polyethylenwachs und mindestens ein Paraffin. Letzteres kann auch allein als einziges Gleitmittel vorteilhaft eingesetzt werden. Vorzugsweise beträgt das Gewichtsverhältnis des Gleitmittels mit einem höheren Schmelzpunkt zum Gleitmittel mit einem niedrigeren Schmelzpunkt 2 : 1 bis 1 : 2, besonders bevorzugt 3 : 2 bis 2 : 3, 4 : 3 bis 3 : 4 oder liegt bei nahezu oder genau 1 : 1.

Vorzugsweise ist das mindestens eine Gleitmittel, das gegebenenfalls auch gleichzeitig ein Umformmittel sein kann, in einem Gehalt von etwa Null oder im Bereich von 0,5 bis 80 g/L, von 0,8 bis 65 g/L oder von 1 bis 50 g/L bezogen auf Feststoffe einschließlich Wirkstoffen und besonders bevorzugt in einem Gehalt im Bereich von 1,5 bis 40 g/L, von 2 bis 30 g/L, von 2,5 bis 24 g/L, von 3 bis 18 g/L oder von 6 bis 12 g/L in der wässerigen Zusammensetzung enthalten. Selbst bei einem hohen Wachsgehalt kann eine Beschichtung bei vielen Ausführungsformen gut überlackierbar gestaltet werden. Es kann ein Gleit- oder/und Umformmittel zugesetzt werden zur Verringerung des Reibungskoeffizienten der Beschichtung, insbesondere beim Umformen.

Hierzu empfehlen sich u.a. Paraffin, Polyethylen oder/und oxidiertes Polyethylen.

Das Gewichtsverhältnis der Gehalte an säuretoleranten organischen Polymeren/Copolymeren e) zu Gehalten an Gleitmitteln f) in der wässerigen Zusammensetzung - insbesondere im Bad -und im Trockenfilm kann in weiten Bereichen schwanken. Vorzugsweise liegt dieses Verhältnis im Bereich von 100 : 12 bis 100 : 0,1, von 100 : 9 bis 100 : 0,3 oder von 100 : 7 bis 100 : 0,5, besonders bevorzugt im Bereich von 100 : 6 bis 100 : 1, von 100 : 5 bis 100 : 2 oder von 100 : 4 bis 100 : 3.

Ein Wachsgehalt ist insbesondere dann vorteilhaft, wenn die erfindungsgemäße Beschichtung nicht überlackiert werden soll. Das Gleitmittel kann auch zur Verringerung des Reibungskoeffizienten der Beschichtung zugesetzt werden, insbesondere zum Umformen, oder/und als Schutz vor Kratzern. Hierzu empfehlen sich u.a. Paraffin, Polyethylen, Polypropylen, oxidiertes Polyethylen oder/und oxidiertes Polypropylen. Die einzelnen Wachse können amorph oder/und kristallin vorliegen.

Vorzugsweise enthält die wässerige Zusammensetzung mehrere Gleitmittel, insbesondere zwei oder drei Gleitmittel, von denen mindestens zwei Gleitmittel deutlich unterschiedliche Eigenschaften zueinander aufweisen. Zum Umformen der mit der Zubereitung beschichteten Substrate ist mindestens ein Gleitmittel, insbesondere mindestens ein Wachs, oder eine Kombination aus mindestens zwei Gleitmitteln, insbesondere davon mindestens ein Wachs, mit deutlich unterschiedlichen Schmelzpunkten oder Schmelzbereichen vorteilhaft. Hierbei kann der Schmelzpunkt oder Schmelzbereich zwischen zwei Gleitmitteln um mindestens 15 °C unterschiedlich sein. Zur Vereinfachung wird im Folgenden nur von Schmelzpunkt gesprochen. Dadurch kann der Reibungskoeffizient der Beschichtung so eingestellt werden, dass ein optimales Gleiten der beschichteten Substrate in den Umformwerkzeugen gewährleistet wird. Das bedeutet, dass die behandelten Substratoberflächen so gleitfähig sind, dass durch optimalen Niederhalterdruck der Werkzeuge eine optimale Passform des herzustellenden Formteils möglich ist. Wenn die Oberfläche des beschichteten Substrats nicht ausreichend gleitfähig ist, ist die Gefahr einer ungewollten Verjüngung des Substrats üblicherweise ohne wesentliche Verringerung der Wandstärke beim Umformen, wodurch sich das Substrat in der Form ungewollt zu geringeren Abmessungen verändert, an den Formbereichen vorhanden, die im schlimmsten Fall zum Reißen des Substrats führen kann. Wenn die beschichtete Substratoberfläche zu gleitfähig ist, kann die Gefahr bestehen, dass das erfindungsgemäß beschichtete Band nicht zu einem ausreichend stabilen Coil aufgewickelt werden kann. Weiterhin besteht bei der Tafelblechherstellung die Gefahr, dass beim Stanzen insbesondere von Kleinteilen oder/und beim Rollformen oder/und Abkanten von Formteilen der Bandvorschub nicht passgenau durchgeführt werden kann und es dann zu unzureichender Maßhaltigkeit der herzustellenden Formteile kommt. Eine Kombination von mindestens zwei verschiedenen Wachsen kann hierbei vorzugsweise so ausgewählt werden, dass eine befriedigende Lackhaftung von der erfindungsgemäßen Beschichtung zur Schicht des nachfolgend aufgebrachten Pulverlacks oder Naßlacks auf Basis von organischem Lösemittel oder/und Wasser sichergestellt werden kann.

Außerdem kann der erfindungsgemäßen Zusammensetzung auch mindestens ein **Filmbildungshilfsmittel** wie z.B. mindestens ein langkettiger Alkohol zugesetzt werden. Das mindestens eine Filmbildungshilfsmittel, das in Form von mindestens einem langkettigen Alkohol zugegeben wird oder/und zugegeben ist, dient zur Verbesserung der Filmbildung insbesondere während der Trocknung. Aus dem organischen Filmbildner wird zusammen mit mindestens einem langkettigen Alkohol insbesondere während oder/und nach der Abgabe von Wasser und anderen flüchtigen Bestandteilen ein weitgehend oder gänzlich homogener organischer Film durch Verfilmen ausgebildet. Zur besseren Filmbildung der polymeren Partikel der wässerigen Zusammensetzung während der Trocknung kann, insbesondere als temporärer Weichmacher der Polymerpartikel, mindestens ein langkettiger Alkohol dienen.

Der Gehalt an mindestens einem Filmbildungshilfsmittel kann in der wässerigen Zusammensetzung - insbesondere im Bad - vorzugsweise 0,01 bis 60 g/L bezogen auf Feststoffe einschließlich Wirkstoffen, besonders bevorzugt 0,08 bis 48 g/L oder 0,12 bis 35 g/L, ganz besonders bevorzugt 0,2 bis 25 g/L, 0,3 bis 20 g/L oder 0,5 bis 16 g/L, insbesondere 1 bis 12 g/L, 2 bis 10 g/L, 3 bis 8 g/L oder 4 bis 6 g/L betragen. Das Gewichtsverhältnis der Gehalte an organischem Filmbildner (= organische Polymere/Copolymere) zu Gehalten an Filmbildungshilfsmitteln in der wässerigen Zusammensetzung - insbesondere im Bad - kann in weiten Bereichen schwanken. Vorzugsweise liegt dieses Verhältnis im Bereich von 100 : 10 bis 100 : 0,1, von 100 : 6 bis 100 : 0,4 oder von 100 : 5 bis 100 : 0,8, besonders bevorzugt im Bereich von 100 : 4 bis 100 : 1,2 oder von 100 : 3 bis 100 : 1,5.

Unter **Verfilmen** wird eine Filmbildung aus einem Material mit hohem organischen Anteil wie einer Polymerdispersion verstanden, bei der vor allem Polymerteilchen vorzugsweise bei Raumtemperatur oder leicht erhöhter Temperatur in einen einheitlichen Film übergehen. Dabei wird hierbei oft von Verschmelzen oder/und Zusammenfließen (Koaleszenz) der Polymerteilchen gesprochen. Hierbei erfolgt die Verfilmung aus einem wässerigen Medium bei der Trocknung und gegebenenfalls unter Plastifizierung der Polymerteilchen durch die verbleibenden Filmbildungshilfsmittel. Die Filmbildung lässt sich durch den Einsatz weichen Kunstharzes (Pendelhärte nach König bei Raumtemperatur gemessen nach DIN EN ISO 1522 von weniger als 30 s) oder/und durch Zusatz von Substanzen, die als temporäre Weichmacher wirken (= Filmbildungshilfsmittel, K), ermöglichen oder/und verbessern. Filmbildungshilfsmittel wirken als spezifische Lösemittel, die die Oberfläche der Polymerteilchen erweichen und so deren geometrische Veränderung durch Verschmelzung der organischen Partikel miteinander ermöglichen, aber insbesondere nicht kurzflüchtig sind und insbesondere vorwiegend nach dem Abdampfen des Wassers abdampfen und vorzugsweise nicht dauerhaft im Film verbleiben. Der entstehende Film ist hierbei oft porenfrei oder im Wesentlichen porenfrei und kann nicht aufgelöste oder/und nicht auflösbare Partikel wie z.B. anorganische Partikel einschließen. Hierbei ist vorteilhaft, wenn diese Weichmacher einerseits ausreichend lange in der wässerigen Zusammensetzung bleiben, um sich auf die Polymerteilchen lange auswirken zu können, und danach verdampfen und somit aus dem Film entweichen. Bei einer geeigneten Filmbildung wird ein transparenter Film ausgebildet, jedoch kein milchig-weißer oder gar pulveriger Film, was ein Anzeichen für eine gestörte Filmbildung ist. Für die möglichst perfekte Filmbildung hat die Temperatur des auf einer Oberfläche applizierten Nassfilms über der Mindestfilmbildungstemperatur (MFT) zu liegen. Denn nur dann sind die Polymerteilchen weich genug, um zu koaleszieren. Hierbei ist es besonders vorteilhaft, wenn die Filmbildungshilfsmittel als temporäre Weichmacher den pH-Wert der wässerigen Zusammensetzung nicht oder nahezu nicht verändern.

Die Auswahl der geeigneten Filmbildungshilfsmittel ist dabei nicht einfach, wobei oft ein Gemisch aus mindestens zwei Filmbildungshilfsmitteln hilfreich ist. Vorzugsweise weisen die Filmbildungshilfsmittel einen Siedepunkt bei 760 mm Hg im Bereich von 140 bis 400 °C auf, insbesondere im Bereich von 150 bis 340 °C, von 160 bis 310 °C oder von 170 bis 280 °C, oder/und eine Verdunstungszahl bei Ether = 1 im Bereich von 100 bis 5000, insbesondere im Bereich von 120 bis 4000, von 135 bis 2800 oder von 150 bis 1600. Insbesondere vorteilhaft als Filmbildungshilfsmittel sind sogenannte langkettige Alkohole, vorzugsweise solche mit 4 bis 22 C-Atomen oder von 6 bis 18 C-Atomen, besonders bevorzugt mit 6 bis 14 oder mit 8 bis 12 C-Atomen. Sie können auch alkoxyliert sein. Sie sind vorzugsweise mindestens ein Glykol oder/und dessen Derivate wie auf Basis Butandiol, wie auf Basis Butylglykol wie Butyldiglykol, wie auf Basis Ethylenglykol wie z.B. Ethylenglykolmonobutylether, Ethylenglykolmonoethylether, Ethylenglykolmonomethylether, Ethylglykolpropylether, Ethylenglykolhexylether, Diethylenglykolmethylether, Diethylenglykolethylether, Diethylenglykolbutylether, Diethylenglykolhexylether, Tripropylenglykolethylether oder/und wie auf Basis Propylenglykol wie Propylenglykolmonomethylether, Dipropylenglykolmonomethylether, Tripropylenglykolmonomethylether, Propylenglykolmonobutylether, Dipropylenglykolmonobutylether, Tripropylenglykolmonobutylether, Propylenglykolmonopropylether, Dipropylenglykolmonopropylether, Tripropylenglykolmonopropylether oder/und Propylenglykolphenylether.

Im Unterschied zum Verfilmen, das bei vergleichsweise niedrigen Temperaturen wie z.B. bei Temperaturen im Bereich ab etwa 5 °C erfolgen kann, werden für chemisch oder chemisch-thermisch vernetzende organische Beschichtungen üblicherweise Temperaturen von mindestens 50 °C zur Vernetzung benötigt. Vorzugsweise werden Filmbildungshilfsmittel ausgewählt und in einer Menge zugesetzt, so dass die Zusammensetzung vorzugsweise bei Temperaturen größer 5 °C verfilmt, besonders bevorzugt größer 10 °C, größer 20 °C oder größer 40 °C, insbesondere größer 60 °C, größer 80 °C, größer 100 °C oder größer 120 °C. Entsprechend ist es bevorzugt, dass die Mindestfilmbildungstemperatur der Kunstharze einschließlich Filmbildungshilfsmittel bei Temperaturen größer 5 °C verfilmt, besonders bevorzugt größer 10 °C, größer 20 °C oder größer 40 °C, insbesondere größer 60 °C, größer 80 °C, größer 100 °C oder größer 120 °C liegt. Die anschließende Trocknung findet vorzugsweise bei leicht höheren (mindestens 10, 15 oder 20 °C) oder deutlich höheren (mindestens 30, 50, 70, 90 oder 110 °C) Temperaturen als der Mindestfilmbildungstemperatur der Kunstharze einschließlich Filmbildungshilfsmittel statt. Bei der Trocknung entweichen Wasser und gegebenenfalls enthaltene organische Lösemittel. Dabei setzt üblicherweise die Filmbildung ein, bei der die organischen Substanzen, gegebenenfalls in partikulärer Form, sich dichter aneinander lagern können, durch die höhere Temperatur weicher werden und einen geschlossenen Film ausbilden können. Besonders bevorzugt ist, dass das Verfilmen zu einem wesentlichen Anteil bereits bei Raumtemperatur erfolgt.

Die **Koaleszenz** der Polymerteilchen kann in einzelnen Ausführungsformen auch ohne Zusatz von Filmbildungshilfsmittel erfolgen, etwa dann, wenn die Pendelhärte nach König der organischen polymeren Zusätze weniger als 10 s beträgt.

Außerdem kann der erfindungsgemäßen Zusammensetzung in einzelnen Ausführungsformen auch mindestens ein **Vernetzer** zugesetzt werden. Ein solcher Vernetzer kann helfen, eine verfilmte Beschichtung, die nur physikalisch getrocknet und homogenisiert ist, weiter durch chemische Reaktionen zu verfestigen und widerstandsfähiger zu machen. Dadurch wird die Wasser-und Chemikalienbeständigkeit von verfilmten Beschichtungen üblicherweise noch weiter verbessert. Hierzu ist es vorteilhaft, wenn das zugesetzte organische Polymer/Copolymer COOH-Gruppen oder/und andere zur Vernetzung geeignete Gruppen aufweist.

In Abhängigkeit von den Trocknungs- oder/und Vernetzungstemperaturen können bestimmte Vernetzer ausgewählt werden. Hierbei werden organische Vernetzer auf Basis von Melamin-Formaldehyd üblicherweise im Temperaturbereich von etwa 120 bis etwa 250 °C eingesetzt, vorzugsweise im Bereich von 140 bis etwa 200 °C, während die übrigen organischen Vernetzer meistens oder üblicherweise in einem Temperaturbereich etwa von 50 bis etwa 120 °C eingesetzt werden, vorzugsweise im Bereich von etwa 60 bis etwa 110 oder bis etwa 100 °C. Diese letzten Vernetzer werden hier als organische Niedrigtemperaturvernetzer angesprochen. Als Vernetzer kann beispielsweise mindestens ein vorzugsweise polyfunktionelles Aziridin (z.B. im Bereich von 40 bis 250 °C wirksam), mindestens ein Carbodiimid wie z.B. mindestens ein Polycarbodiimid (z.B. im Bereich von 80 bis 250 °C), mindestens ein vorzugsweise geblocktes Isocyanat (z.B. im Bereich von 80 bis 250 °C), mindestens ein Melamin-Formaldehyd (z.B. im Bereich von 120 bis 250 °C), mindestens ein Triazin (z.B. im Bereich von 100 bis 250 °C) oder/und mindestens ein Diamin (z.B. im Bereich von 60 bis 250 °) eingesetzt werden. Ein geblocktes Isocyanat kann jedoch nachteilig sein, wenn dadurch die Reaktion extrem langsam abläuft und für die Niedrigtemperaturtrocknung von Bandbehandlungen aus diesem Grund ungeeignet ist. Ein Vernetzer auf Basis von Triazin weist im Vergleich zu einem Vernetzer auf Basis von Melamin den Vorteil auf, während der thermischen Reaktion (Trocknung, Vernetzung) kein Formaldehyd abzuspalten.

Als der mindestens eine Vernetzer können vorzugsweise eingesetzt werden: Organische Vernetzer wie z.B. Adipindihydrazid, auf Basis von Aziridin wie z.B. polyfunktionales Polyaziridin, auf Basis einer Azoverbindung, auf Basis von Diamin, auf Basis von Diimid wie z.B. multifunktionelle Polycarbodiimide, auf Basis von Formaldehyd wie z.B. Harnstoff-Formaldehyd oder/und Melamin-Formaldehyd, auf Basis von Imidazol wie z.B. 2-ethyl-4-methyl-lmidazol, auf Basis von Isocyanat, auf Basis von Isocyanurat, auf Basis von Melamin wie z.B. Hexamethoxymethyl-Melamin, auf Basis von Peroxid, auf Basis von Triazin wie z.B. Tris-(Alkoxycarbonylamino)-Triazin oder/und auf Basis von Triazol. Als Vernetzer kann gegebenenfalls auch einer auf Basis von Zirkoniumcarbonat eingesetzt werden, der im sauren oder neutralen Medium stabil oder/und stabilisiert ist.

Der Vernetzer kann insbesonders geeignet sein, um mindestens eines der in der Zusammensetzung der Beschichtung enthaltenen Kunstharze mindestens teilweise zu vernetzen oder/und mit mindestens einem der enthaltenen Kunstharze chemisch reagieren zu lassen. Die Vernetzung einschließlich der chemischen Reaktion kann insbesondere chemisch oder/und chemisch-thermisch erfolgen. Der Vernetzer kann auch oft als Reaktionskatalysator oder/und teilweise korrosionsinhibierend wirken. Er kann helfen, die Resistenz gegen angreifende Medien wie Chemikalien und Witterungseinflüsse sowie gegen mechanische Beanspruchungen zu verbessern, die Stabilität der erkennbare Farbe des Substrates insbesondere bei Zink und Zink-haltigen Oberflächen bei hoher Luftfeuchtigkeit oder/und Feuchtraumbeanspruchung zu verbessern oder zu sichern und das Darkening, das Dunklerwerden einer transparenten Beschichtung, zu vermeiden oder deutlich zu verringern. Er kann in manchen Ausführungsvarianten dazu dienen, in der wässerigen Zusammensetzung stabil vorzuliegen, um hierin dauerhaft homogen verteilt und dispergiert zu bleiben oder/und um bei Temperaturen z.B. etwa unterhalb von 40 oder 45 °C kaum oder nicht reaktiv und somit lagerstabil zu bleiben, aber z.B. etwa oberhalb von 45 oder 50 °C die gewünschte Reaktion mit den Kunstharzen nach dem Aufbringen der Beschichtung zu ermöglichen.

Das Gewichtsverhältnis der Gehalte an organischem Filmbildner zu Gehalten an Vernetzern in der wässerigen Zusammensetzung - insbesondere im Bad - kann in weiten Bereichen schwanken. Vorzugsweise liegt dieses Verhältnis im Bereich von 100 : 10 bis 100 : 0,1, von 100 : 5 bis 100 : 0,2 oder von 100 : 2,5 bis 100 : 0,3, besonders bevorzugt im Bereich von 100 : 2 bis 100 : 0,5, von 100 : 1,6 bis 100 : 0,8 oder von 100 : 1,4 bis 100 : 1.

Hierbei können die Gehalte des mindestens einen Vernetzers sehr stark je nach seiner Art, je nach den beteiligten Kunstharzen oder/und je nach den gewünschten Beschichtungseigenschaften oder/und auch je nach Kombination verschiedener Vernetzer in der wässerigen Zusammensetzung schwanken. Der mindestens eine Vernetzer wird vorzugsweise so ausgewählt, dass die Vernetzungsreaktionen nicht oder im Wesentlichen nicht in der wässerigen Zusammensetzung vor dem Aufbringen der Beschichtung starten. Gegebenenfalls ist ein Zusatz von jeweils mindestens einem Reaktionsblocker oder/und Stabilisator vorteilhaft, der die Vernetzungsreaktionen in der wässerigen Zusammensetzung vor dem Aufbringen der Beschichtung zu unterdrücken hilft.

Vorzugsweise liegt der Gehalt der wässerigen Zusammensetzung an mindestens einem Vernetzer im Bereich von 0,2 bis 80 g/L bezogen auf Feststoffe einschließlich Wirkstoffen oder von 0,5 bis 50 g/L, besonders bevorzugt im Bereich von 1,5 bis 35 g/L, von 3 bis 20 g/L oder von 6 bis 10 g/L.

Außerdem ist es vorteilhaft, mindestens ein **Netzmittel** zuzusetzen, um den Nassfilm gleichmäßig in der flächigen Ausbreitung und in der Schichtdicke sowie dicht und ohne Fehlstellen aufbringen zu können. Grundsätzlich sind viele Netzmittel hierfür geeignet, vorzugsweise Acrylate, Silane, Polysiloxane Silicontenside oder/und Alkohole, die die Oberflächenspannung der wässerigen Zusammensetzung herabsetzen und helfen, die gesamte metallische Oberfläche zu benetzen. Das Netzmittel kann in einer Gesamtmenge im Bereich von 0,1 bis 10 g/L zugesetzt werden, insbesondere von 1 bis 4 g/L.

Ferner kann der erfindungsgemäßen Zusammensetzung auch mindestens ein **Entschäumer** vorzugsweise in einer Gesamtmenge im Bereich von 0,1 bis 10 g/L zugesetzt werden, insbesondere von 1 bis 4 g/L. In manchen Fällen wird der Zusatz eines Entschäumers notwendig sein, um die Schaumbildung zu begrenzen. Denn bei stärkerer Schaumbildung können eventuell Bläschen in der Beschichtung erhalten bleiben und Poren bilden. Grundsätzlich sind die hierbei hilfreichen Additive einschließlich der für Lacke oft eingesetzten Lackadditive dem Fachmann grundsätzlich bekannt.

Vorzugsweise enthält die erfindungsgemäße wässerige Zusammensetzung **Kationen** von Aluminium, Chrom(III) oder/und Zink oder/und mindestens eine Verbindung mit einem Gehalt an Aluminium, Chrom(III) oder/und Zink, in manchen Ausführungsformen auch Kationen von Aluminium, Chrom(III), Eisen, Mangan oder/und Zink oder/und mindestens eine Verbindung mit einem Gehalt an Aluminium, Chrom(III), Eisen, Mangan oder/und Zink. Die erfindungsgemäße Ausgangszusammensetzung, das heißt insbesondere das frische Konzentrat oder/und die frische Badzusammensetzung, aber oft auch die Ergänzungslösung, die dem Bad im Einsatz bei Bedarf zugesetzt wird, insbesondere um das Bad einsatzbereit zu erhalten, enthält in sehr vielen Ausführungsformen vorzugsweise einen wesentlichen Gehalt an Kationen oder/und an mindestens einer Verbindung von Aluminium, Chrom(III), Eisen, Mangan oder/und Zink. Vorzugsweise enthält die Zusammensetzung einen Gesamtgehalt an Kationen von Eisen oder/und Mangan oder/und mindestens eine Verbindung mit einem Gehalt an Eisen oder/und Mangan im Bereich von 0,1 bis 20 g/L, von 0,5 bis 12 g/L, von 1 bis 8 g/L oder von 2 bis 5 g/L berechnet als Metall. In vielen Ausführungsformen enthält sie neben den Kationen oder/und Verbindungen von Aluminium, Chrom, Eisen, Mangan, Titan, Zink oder/und Zirkonium keinen oder keinen wesentlichen Gehalt an weiteren Schwermetallkationen oder/und Schwermetallverbindungen neben den eben genannten. Oft enthält sie auch keinen Gehalt an Chrom. Im Kontakt mit den Anlagen, mit den zu beschichtenden metallischen Oberflächen oder/und durch Einschleppen von Verunreinigungen kann die Zusammensetzung jedoch oft weitere Kationen oder/und Verbindungen aufnehmen. Daher kann die ursprüngliche chromfreie Zusammensetzung auch Spuren oder vereinzelt sogar geringe Gehalte z.B. an Chrom, Chromverbindungen oder/und Kationen/Verbindungen von weiteren Stahlveredlern enthalten. Bevorzugt enthält die Zusammensetzung einen Gesamtgehalt an Kationen von Aluminium, Chrom(III) oder/und Zink oder/und an mindestens einer Verbindung mit einem Gehalt an Aluminium, Chrom(III) oder/und Zink im Bereich von 0,5 bis 80 g/L, von 1 bis 50 g/L oder von 2 bis 30 g/L berechnet als Metall oder besonders bevorzugt einen Gesamtgehalt an Kationen von Aluminium, Chrom(III), Eisen, Mangan oder/und Zink oder/und an mindestens einer Verbindung mit einem Gehalt an Aluminium, Chrom(III), Eisen, Mangan oder/und Zink im Bereich von 0,5 bis 80 g/L, von 1 bis 50 g/L oder von 2 bis 30 g/L berechnet als Metall. Ganz besonders bevorzugt liegen die Gehalte an Kationen von Aluminium, Chrom(III) oder/und Zink oder/und an mindestens einer Verbindung mit einem Gehalt an Aluminium, Chrom(III) oder/und Zink oder die Gehalte an Kationen von Aluminium, Chrom(III), Eisen, Mangan oder/und Zink oder an mindestens einer Verbindung mit einem Gehalt an Aluminium, Chrom(III), Eisen, Mangan oder/und Zink im Bereich von 3 bis 25, von 4 bis 20, von 5 bis 15, von 6 bis 12 oder von 8 bis 10 g/L, berechnet als Metall. Besonders bevorzugt ist ein Gehalt an Chrom(III) als Kationen oder/und Verbindungen Null, in etwa Null oder im Bereich von 0,01 bis 30, von 0,1 bis 20, von 0,3 bis 12, von 0,5 bis 8, von 0,8 bis 6 oder von 1 bis 3 g/L berechnet als Metall. Besonders bevorzugt besteht die erfindungsgemäße Zusammensetzung bezüglich der Kationen oder/und der Metall enthaltenden Verbindungen nur oder im Wesentlichen nur aus Kationen von Aluminium, Chrom(III) oder/und Zink oder/und aus mindestens einer Verbindung mit einem Gehalt an Aluminium, Chrom(III) oder/und Zink, insbesondere wenn von Alkalimetallen, Titan, Hafnium, Zirkonium und ihren Verbindungen abgesehen wird. Der Gehalt an Chrom (VI) als Kationen oder/und Verbindungen kann insbesondere Null, in etwa Null oder im Bereich von 0,01 bis 8, von 0,05 bis 5, von 0,1 bis 3 oder von 0,3 bis 1 g/L berechnet als Metall. Vorzugsweise sind mindestens 60 %, mindestens 80 %, mindestens 90 % oder sogar mindestens 95 % dieser Kationen und Verbindungen solche auf Basis von Aluminium oder/und Zink, wenn von Alkalimetallen, Titan, Hafnium, Zirkonium und ihren Verbindungen abgesehen wird. Der Gehalt an derartigen Kationen und Verbindungen kann in weitem Rahmen variiert werden. Gegebenenfalls können diese komplexiert vorliegen. Hierbei kann auch berücksichtigt werden, dass aufgrund der Beizwirkung der Hauptbestandteil der metallischen Oberfläche wie z.B. Zink bei verzinkten Oberflächen, Eisen bei Stahloberflächen und Aluminium bei Aluminiumoberflächen bei längerem Durchsatz in geringeren Gehalten zugesetzt wird, weil sich der Hauptbestandteil von alleine aufgrund der Beizwirkung ergänzt. Besonders bevorzugt ist, dass die erfindungsgemäße Zusammensetzung im Wesentlichen nur Kationen von Alkalimetall(en), Aluminium, Titan, Zink oder/und Zirkonium enthält bzw. nur diese der Zusammensetzung zugesetzt werden. Besonders bevorzugt ist, dass der erfindungsgemäßen Zusammensetzung bezüglich der Kationen oder/und Metall enthaltenden Verbindungen nur Kationen oder/und Verbindungen von Alkalimetall(en), Aluminium, Chrom(III), Titan, Zink oder/und Zirkonium zugesetzt werden. Ganz besonders bevorzugt ist, dass die erfindungsgemäße Zusammensetzung nur oder im Wesentlichen nur Alkalimetall(e), Titan und Zink oder Alkalimetall(e), Titan und Aluminium enthält bzw. der Zusammensetzung zugesetzt werden. Besonders bevorzugt ist, dass der erfindungsgemäßen Zusammensetzung bezüglich der Kationen oder/und Metall enthaltenden Verbindungen nur Kationen oder/und Verbindungen von Alkalimetall(en), Aluminium, Chrom(III), Titan, Zink oder/und Zirkonium zugesetzt werden. Hierbei können gegebenenfalls weitere Arten von Kationen insbesondere Spurenverunreinigungen, eingeschleppte Verunreinigungen oder/und aus Vorrichtungen oder/und Substraten herausgebeizte Verunreinigungen auftreten.

In den meisten Ausführungsformen ist der Gehalt an Kationen oder/und an mindestens einer Verbindung von Erdalkalimetallen etwa bei Null oder im Bereich von 0,001 bis 1,5 g/L, von 0,003 bis 1 g/L, von 0,01 bis 0,5 g/L oder von 0,03 bis 0,1 g/L, berechnet als das jeweilige Metall. Wenn der Gehalt an diesen Kationen/Verbindungen sehr gering ist, sind keine Nachteile zu erwarten. Wenn der Gehalt an diesen Kationen/Verbindungen zu hoch ist, ist die Stabilität der Lösung gefährdet und können Einbußen im Korrosionsschutz auftreten. Gehalte an Erdalkalimetall stören üblicherweise, wenn sie zu Ausfällungen führen. Aufgrund der Gehalte an Fluorid (einschließlich Komplexfluorid) kann es leicht zu Ausfällungen mit Erdalkalimetall kommen. In den meisten Ausführungsformen ist der Gehalt an Kationen oder/und an mindestens einer Verbindung von mindestens einem Alkalimetall etwa bei Null oder im Bereich von 0,001 bis 5 g/L, von 0,01 bis 2 g/L, von 0,1 bis 1 g/L oder von 0,02 bis 0,2 g/L, berechnet als das jeweilige Metall. Allerdings stören geringe Alkalimetallgehalte und Erdalkalimetallgehalte vielfach nicht, wenn sie in der Größenordnung der Gehalte von Stadtwasser enthalten sind.

Die erfindungsgemäße wässerige Zusammensetzung weist vorzugsweise einen Gehalt an **Phosphat** im Bereich von 1 bis 250 g/L berechnet als PO₄ auf. Besonders bevorzugt liegt der Phosphatgehalt der Zusammensetzung im Bereich von 2 bis 200 g/L, von 3 bis 120 g/L, von 4 bis 100 g/L, von 5 bis 80 g/L, von 6 bis 65 g/L, von 7 bis 50 g/L, von 8 bis 40 g/L, von 9 bis 30 g/L, von 10 bis 22 g/L oder von 12 bis 18 g/L, berechnet als PO₄. Insbesondere liegt der Phosphatgehalt der Zusammensetzung im Bereich von 0,75 bis 185 g/L, von 1,5 bis 150 g/L, von 2,2 bis 90 g/L, von 3 bis 75 g/L, von 4 bis 60 g/L, von 5 bis 50 g/L, von 6 bis 40 g/L, von 7 bis 30 g/L, von 8 bis 22 g/L oder von 10 bis 16 g/L, berechnet als P₂O₅. Wenn der Gehalt an Phosphat zu gering ist, ist der Korrosionsschutz gering. Vorzugsweise liegt ein PhosphatZusatz so hoch, dass eine deutliche Verbesserung des Korrosionsschutzes und des Oberflächenerscheinungsbildes erhalten wird. Wenn der Gehalt an Phosphat zu hoch ist, können sich matte Beschichtungen ausbilden. Vorzugsweise liegt das Verhältnis von Al : PO₄ bei Zusammensetzungen, deren Gehalt an Kationen oder/und anorganischen Verbindungen ausgewählt aus solchen auf Basis von Aluminium, Chrom, Eisen, Mangan oder/und Zink überwiegend solche auf Basis von Aluminium aufweist, im Bereich von 1 : 10 bis 1 : 25, insbesondere im Bereich von 1 : 12 bis 1 : 18. Vorzugsweise liegt das Verhältnis von Zn : PO₄ bei Zusammensetzungen, deren Gehalt an Kationen oder/und anorganischen Verbindungen ausgewählt aus solchen auf Basis von Aluminium, Chrom, Eisen, Mangan oder/und Zink bzw. auf Basis von Aluminium, Chrom oder/und Zink überwiegend solche auf Basis von Zink aufweist, im Bereich von 1 : 4 bis 1 : 20, insbesondere im Bereich von 1 : 6 bis 1 : 15. Vorzugsweise wird Phosphat als mindestens eine Verbindung ausgewählt aus Monophosphaten (= Orthophosphaten auf Basis von PO₄³⁻, Monohydrogenphosphaten auf Basis von HPO₄²⁻, Dihydrogenphosphaten auf Basis von H₂PO₄⁻), Diphosphaten, Triphosphaten, Phosphorpentoxid oder/und Phosphorsäure (= Orthophosphorsäure H₃PO₄) zugesetzt. Ein Phosphatzusatz kann ein Monometallphosphatzusatz, ein Zusatz von Phosphorsäure und Metall, von Phosphorsäure und Metallsalz/Metalloxid, von Diphosphat, von Triphosphat, von Polyphosphat oder/und von Phosphorpentoxid zu Wasser oder zu einem wässerigen Gemisch sein.

Bei einem Zusatz z.B. von mindestens einem Orthophosphat, von mindestens einem Triphosphat oder/und von Phosphorsäure wird sich ein entsprechendes chemisches Gleichgewicht insbesondere entsprechend dem pH-Wert und den Konzentrationen dieser Zusätze einstellen. Je saurer die wässerige Zusammensetzung ist, desto eher verschiebt sich das chemische Gleichgewicht zu Orthophosphorsäure H₃PO₄, bei höheren pH-Werten eher zu tertiären Phosphaten auf Basis PO₄³⁻. Im Sinne dieser Anmeldung können grundsätzlich viele verschiedene Orthophosphate zugesetzt werden. Als besonders geeignet haben sich die Orthophosphate von Aluminium, Chrom oder/und Zink erwiesen. Vorzugsweise wird der wässerigen Zusammensetzung mindestens ein Orthophosphat zugegeben mit einem Gesamtzusatz im Bereich von 1 bis 250 g/L berechnet als PO₄, besonders bevorzugt im Bereich von 2 bis 200, von 3 bis 120, von 4 bis 90, von 5 bis 75, von 6 bis 60, von 8 bis 50 oder von 10 bis 30 g/L. Der Gesamtzusatz entspricht dem Gesamtgehalt.

Die wässerige Zusammensetzung kann mit Phosphorsäureanhydrid P₂O₅, mit einer Phosphor-haltigen Säure, mit mindestens einem Salz oder/und Ester der Orthophosphorsäure oder/und mit mindestens einem Salz oder/und Ester einer kondensierten Phosphorsäure hergestellt werden, gegebenenfalls zusammen mit mindestens einem Metall, Carbonat, Oxid, Hydroxid oder/und Salz wie z.B. Nitrat zusammen mit Phosphorsäure.

Der Zusatz an mindestens einem **Komplexbildner** kann vorteilhaft oder/und notwendig sein, wenn der pH-Wert angehoben werden soll, beim Verdünnen der Zusammensetzung mit Wasser, beim Aufnehmen von Gehalten an Ionen oder/und Verbindungen, insbesondere von weiteren lonenarten oder/und weiteren Verbindungen oder/und zum Stabilisieren der Zusammensetzung, insbesondere um Ausfällungen zu verhindern oder/und aufzulösen. Der Komplexbildner hilft, um die anorganischen Komponenten in Lösung zu bringen und stabil in Lösung zu halten. Er dient dazu, einen erhöhten Gehalt an Verbindungen, insbesondere an Kationen wie z.B. Aluminium, Chrom, Eisen, Mangan, Zink oder/und an Kationen, die eingeschleppt werden, die aus Anlagen herausgebeizt werden oder/und die aus den metallischen Oberflächen herausgebeizt werden, in der Zusammensetzung gelöst zu halten. Denn Ausfällungen wie z.B. an Fluoriden, Oxiden, Hydroxiden oder/und Phosphaten insbesondere von Aluminium, Eisen, Mangan oder/und Zink können stören, weil sich verstärkt Schlämme ausbilden oder/und weil die Ausfällungen die Verwendung der Zusammensetzung zum Beschichten beeinträchtigen oder sogar verhindern. Wenn eine Ausfällung auftritt, kann in manchen Situationen bei Bedarf Komplexbildner zugesetzt werden, um die Ausfällung wieder aufzulösen. Der mindestens eine Komplexbildner dient insbesondere dazu, Kationen wie z.B. Aluminium, Chrom, Eisen, Magnesium, Mangan, Titan, Zink oder/und Zirkonium zu komplexieren und die Lösung bzw. Suspension dadurch zu stabilisieren, insbesondere bei geringerer Azidität. Darüber hinaus hat sich in vielen Ausführungsformen ein Zusatz von mindestens einem Komplexbildner auch als mehr oder weniger korrosionsschützend erwiesen. Bei erneutem Zusetzen von Komplexbildner(n) oder/und bei erhöhten Gehalten an Komplexbildner(n) in der wässerigen Zusammensetzung kann es manchmal vorteilhaft sein, auch mindestens eine in etwa neutrale oder basische Verbindung der Zusammensetzung zuzusetzen, um einen höheren pH-Wert einzustellen. Der Begriff "Komplexbildner" im Sinne dieser Anmeldung umfasst auch Chelatbildner (siehe Definition "Komplexbildner" in Römpp).

Als Komplexbildner wird insbesondere mindestens eine Verbindung auf Basis von komplexierendem Alkoxid, auf Basis von Carbonsäure, auf Basis von Phosphonsäure oder/und auf Basis organischer Verbindung wie z.B. auf Basis von Phytinsäure oder/und auf Basis von Phenolverbindung wie z.B. auf Basis von Tanninsäure eingesetzt, besonders bevorzugt mindestens eine Verbindung ausgewählt aus Verbindungen bestehend aus Phosphonsäuren, komplexierenden Carbonsäuren, Phytinsäure, Säuren auf Basis von Polyphenol und deren Derivaten. Hierzu gehört insbesondere auch mindestens eine Verbindung ausgewählt aus Verbindungen bestehend aus Phosphonsäuren, Diphosphonsäuren, Alkylenphosphonsäuren, Phytinsäure, Monocarbonsäure, Dicarbonsäuren, Tricarbonsäuren, Aminocarbonsäuren, Hydroxycarbonsäuren, Säuren auf Basis von Polyphenol und deren Derivaten. In manchen Ausführungsformen hat es sich als besonders vorteilhaft erwiesen, zwei oder drei deutlich verschiedene Komplexbildner zuzusetzen, z.B. solche auf Basis von Phosphonsäure und von Hydroxycarbonsäure.

Je höher der Gehalt an mindestens einem Komplexbildner ist, desto höher kann in manchen Ausführungsformen der pH-Wert der Zusammensetzung in Abhängigkeit von der Kationenmenge eingestellt werden. Der Gehalt an Komplexbildner(n) kann in breiten Bereichen variiert werden. Vorzugsweise enthält die erfindungsgemäße wässerige Zusammensetzung einen Gesamtgehalt an mindestens einem Komplexbildner im Bereich von 0,1 bis 60 g/L. Besonders bevorzugt liegt der Gesamtgehalt an mindestens einem Komplexbildner im Bereich von 0,3 bis 50 g/L, von 1 bis 40 g/L, von 1,5 bis 30 g/L, von 2 bis 24 g/L, von 2,5 bis 18 g/L, von 3 bis 14 g/L, von 4 bis 10 g/L oder von 6 bis 8 g/L. Vorzugsweise liegt der Komplexbildner-Gehalt so hoch, dass die Zusammensetzung eine stabile Lösung ist und dass gegebenenfalls auch beim Verdünnen mit Wasser stabile Lösungen erhalten werden. Wenn der Gehalt an Komplexbildner zu gering ist, können in Abhängigkeit von der Kationenmenge eine pH-Wertanhebung oder/und eine Erhöhung der Gehalte an Kationen oder/und Verbindungen zu Ausfällungen und somit gegebenenfalls zu Niederschlägen und gegebenenfalls zur Schlammbildung führen. Wenn der Gehalt an Komplexbildner zu hoch ist, kann der Korrosionsschutz oder/und die Umformbarkeit beeinträchtigt werden.

Bei dem erfindungsgemäßen Verfahren kann der wässerigen Zusammensetzung vorzugsweise mindestens eine Phosphonsäure, mindestens ein Salz einer Phosphonsäure oder/und mindestens ein Ester einer Phosphonsäure zugesetzt werden. Vorzugsweise enthält die wässerige Zusammensetzung einen Gehalt an mindestens einer Verbindung auf Basis von Phosphonsäure im Bereich von 0,1 bis 60 g/L, besonders bevorzugt im Bereich von 0,3 bis 50 g/L, von 1 bis 40 g/L, von 1,5 bis 26 g/L oder von 2 bis 18 g/L. Besonders bevorzugt wird mindestens eine Verbindung auf Basis von Phosphonsäure wie z.B. eine Diphosphonsäure oder/und eine Diphosphonsäure mit einer Alkylkette und gegebenenfalls weiteren Gruppen, beispielsweise 1-Hydroxyethan-1,1-diphosphonsäure (HEDP), Aminotris(methylenphosphonsäure) (ATMP), Ethylendiamin-tetra(methylenphosphonsäure) (EDTMP), Diethylentriamin-penta(methylenphosphonsäure) (DTPMP), Diethylentriamin-penta-(methylenphosphonsäure) (DTPMP), Hexamethylendiamin-tetra)methylenphosphonsäure) (HDTMP), Hydroxyethyl-amino-di(methylenphosphonsäure) (HEMPA) oder/und Phosphonobutan-1,2,4-tricarbonsäure (PBTC).

Bei dem erfindungsgemäßen Verfahren enthält die Zusammensetzung vorzugsweise jeweils mindestens eine komplexierende Carbonsäure oder/und deren Derivat: Beispielsweise mindestens eine Verbindung auf Basis von Ameisensäure, Bernsteinsäure, Citronensäure, Maleinsäure, Malonsäure, Milchsäure, Oxalsäure, Weinsäure einschließlich ihrer Derivate. Die mindestens eine Carbonsäure kann komplexierend oder/und korrosionsschützend wirken. Vorzugsweise enthält die wässerige Zusammensetzung in manchen Ausführungsformen einen Gehalt an mindestens einer Verbindung auf Basis von komplexierenden Carbonsäure im Bereich von 0,1 bis 60 g/L, besonders bevorzugt im Bereich von 0,3 bis 50 g/L, von 1 bis 40 g/L, von 1,5 bis 26 g/L oder von 2 bis 18 g/L.

Vorzugsweise enthält die erfindungsgemäße Zusammensetzung mindestens eine Verbindung auf Basis von Säuren von Polyphenol wie z.B. einer Gallussäure, einer Tanninsäure und deren Derivate, wie z.B. deren Salze und deren Ester sowie deren Derivate.

Vorzugsweise enthält die wässerige Zusammensetzung mindestens eine komplexierende Verbindung auf Basis Phytin oder/und Polyphenol mit einem Gesamtgehalt dieser Verbindungen im Bereich von 0,05 bis 30 g/L, besonders bevorzugt im Bereich von 0,3 bis 25 g/L oder von 1 bis 20 g/L, ganz besonders bevorzugt im Bereich von 1,5 bis 15 g/L oder von 2 bis 10 g/L.

Bei dem erfindungsgemäßen Verfahren enthält die wässerige Zusammensetzung vorzugsweise einen Gesamtgehalt an mindestens einer **Titan- oder/und Zirkoniumverbindung** von mindestens 0,1 g/L berechnet als Ti-Metall. Insbesondere liegt dieser Gesamtgehalt im Bereich von 0,1 bis 50 g/L, von 0,5 bis 30 g/L oder von 1 bis 15 g/L berechnet als Ti-Metall. Sie kann gegebenenfalls teilweise oder gänzlich als mindestens ein Komplexfluorid zugesetzt werden oder/und teilweise oder gänzlich als mindestens ein Komplexfluorid in der wässerigen Zusammensetzung vorliegen. Besonders bevorzugt enthält die wässerige Zusammensetzung einen Gesamtgehalt an mindestens einer Titan- oder/und Zirkoniumverbindung im Bereich von 1 bis 250 g/L, von 2 bis 180 g/L, von 3 bis 130 g/L, von 4 bis 100 g/L, von 5 bis 80 g/L, von 6 bis 60 g/L, von 8 bis 50 g/L, von 10 bis 40 g/L, von 15 bis 30 g/L oder von 20 bis 25 g/L, berechnet als Ti-Metall. Vorzugsweise enthält die Zusammensetzung einen Gesamtgehalt an mindestens einer Titan- oder/und Zirkoniumverbindung auf Basis von Komplexfluorid im Bereich von 1 bis 200 g/L berechnet als jeweilige Verbindung. Wenn eine Zirkoniumverbindung eingesetzt wird, wird ihr Gehalt über molare Anteile auf entsprechende Titanverbindungsgehalte umgerechnet und als Ti-Metallgehalt angegeben. Als Titan- oder/und Zirkoniumverbindung kann im Einzelfall auch mindestens eine Verbindung zugesetzt werden, die üblicherweise nur im basischen Medium stabil ist, aber bei Zusatz auch von mindestens einem Komplexbildner wie z.B. einem Phosphonat oder/und von mindestens einer schützenden Verbindung wie z.B. einem Tensid auch im sauren Medium stabil ist, wobei diese Verbindung in der wässerigen Zusammensetzung dann komplexiert oder/und geschützt vorliegt. Besonders bevorzugt wird als Fluorid-haltige Verbindung nur mindestens eine Titan- oder/und Zirkoniumverbindung auf Basis von Komplexfluorid zugesetzt. In vielen Ausführungsformen enthält die Zusammensetzung jeweils mindestens ein Komplexfluorid oder/und deren Salz von Aluminium, Titan, Zink oder/und Zirkonium, die in etwa als MeF₄-oder/und MeF₆-Komplex vorliegen. Insbesondere bei Aluminium-haltigen metallischen Oberflächen ist ein nicht zu geringer Komplexfluorid-Zusatz von Bedeutung, um eine erhöhte Beizwirkung zu erzeugen. Vorzugsweise liegt der Zusatz und Gehalt von mindestens einer Titan- oder/und Zirkoniumverbindung so hoch, dass ein guter Blankkorrosionsschutz und bei Bedarf auch eine gute Lackhaftung zur darauf folgenden Lack/Primer-Beschichtung auftritt. Wenn der Gehalt an mindestens einer Titan- oder/und Zirkoniumverbindung zu hoch ist und wenn Komplexbildner in unzureichender Menge vorhanden ist/sind, kann es leicht zu einer Instabilität des Bades und damit zu Ausfällungen kommen. Denn ein Fluorid bzw. ein Komplexfluorid kann auch als Komplexbildner wirken. Fluorid und Komplexfluorid werden jedoch im Sinne dieser Anmeldung nicht als Komplexbildner gezählt. Der Zusatz und Gehalt einer Titanverbindung hat sich insbesondere für die Verbesserung des Korrosionsschutzes als vorteilhaft erwiesen. Der Zusatz und Gehalt einer Zirkoniumverbindung hat sich insbesondere bei feuerverzinkten Oberflächen für die Verbesserung der Lackhaftung als vorteilhaft erwiesen. Die erfindungsgemäße Titan- oder/und Zirkoniumverbindung kann einerseits in vielen Ausführungsformen mindestens ein entsprechendes Komplexfluorid sein oder/und mindestens eine komplexierte Substanz wie z.B. mindestens ein Titanchelat, insbesondere mindestens ein Titanalkoxid, wobei die weniger reaktiven Titan- oder/und Zirkoniumverbindungen bevorzugt sind. Vorzugsweise ist das Gewichtsverhältnis von Silan/Silanol/Siloxan/Polysiloxan zu Komplexfluorid auf Basis von Titan oder/und Zirkonium berechnet als zugesetztes Silan oder/und Polysiloxan bzw. gegebenenfalls molar umgerechnet auf H₂TiF₆ kleiner als 2 : 1, kleiner als 1,5 : 1, kleiner 1 : 1 oder kleiner 0,5: 1.

In einzelnen Ausführungsformen enthält die erfindungsgemäße Zusammensetzung mindestens eine Titan oder/und Zirkonium-haltige Fluorid-freie Verbindung wie z.B. einen Chelat. Diese Verbindung kann dazu dienen, Titan oder/und Zirkonium in anderer Form in die Zusammensetzung zu bringen und ist daher eine Möglichkeit einer Quelle einer solchen Verbindung. Eine solche Verbindung kann den Korrosionsschutz deutlich verbessern und die wässerige Zusammensetzung stabil in Lösung halten. Vorzugsweise enthält die erfindungsgemäße Zusammensetzung einen Gehalt an Titan- oder/und Zirkoniumchelaten im Bereich von 0,1 bis 200 g/L, besonders bevorzugt im Bereich von 1 bis 150 g/L, von 3 bis 110 g/L, von 5 bis 90 g/L, von 7 bis 70 g/L, von 10 bis 50 g/L oder von 15 bis 30 g/L.

Insbesondere wird der Gehalt an Titan- oder/und Zirkonium-Verbindungen so gewählt, dass auf der metallischen Oberfläche ein Gehalt an Titan oder/und Zirkonium im Bereich von 3 bis 60 mg/m², von 5 bis 45 mg/m² oder von 10 bis 35 mg/m² verbleibt, berechnet als Ti-Metall, ermittelt mit Röntgenfluoreszenzanalyse. Eine solche Verbindung wird insbesondere dann zugesetzt, wenn keine andere Titan- oder/und Zirkonium-haltige Verbindung in der erfindungsgemäßen Zusammensetzung enthalten ist. Denn es ist besonders vorteilhaft, dass mindestens eine Titan- oder/und Zirkonium-haltige Verbindung in der erfindungsgemäßen Zusammensetzung enthalten ist. Als derartige Verbindung kann insbesondere Dihydroxo-bis-(ammonium-lactat)titanat eingesetzt werden.

Bei dem erfindungsgemäßen Verfahren enthält die wässerige Zusammensetzung vorzugsweise in etwa keinen **Fluorid-Gehalt** oder einen Gehalt an freiem Fluorid F_{frei} im Bereich von 0,01 bis 5 g/L oder/und einen Gehalt an Gesamtfluorid F_{gesamt} im Bereich von 0,5 bis 80 g/L. Besonders bevorzugt enthält die Zusammensetzung einen Gehalt an freiem Fluorid F_{frei} im Bereich von 0,1 bis 3,5 g/L, von 0,3 bis 2 g/L oder von 0,5 bis 1 g/L oder/und einen Gehalt an Gesamtfluorid F_{gesamt} im Bereich von 1 bis 50 g/L, von 1,5 bis 40 g/L, von 2 bis 30 g/L, von 2,5 bis 25 g/L, von 3 bis 20 g/L, von 4 bis 16 g/L, von 5 bis 12 g/L oder von 7 bis 10 g/L. In vielen Ausführungsformen wird der erfindungsgemäßen Zusammensetzung keine Flußsäure, kein Monofluorid oder/und kein Bifluorid zugesetzt. Dann kann sich ein Gehalt an Flußsäure, Monofluorid oder/und Bifluorid in der erfindungsgemäßen Zusammensetzung nur aufgrund der Gleichgewichtsbedingungen in geringen Mengen aus mindestens einem Komplexfluorid oder/und ihrem Derivat ausbilden. In einzelnen Ausführungsformen wird der erfindungsgemäßen Zusammensetzung Flußsäure, Monofluorid oder/und Bifluorid mit einem Gesamtgehalt von 0,01 bis 8 g/L berechnet als freies Fluorid F_{frei}, insbesondere von 0,1 bis 5 oder von 0,5 bis 3 g/L zugesetzt.

Im Rahmen dieser Erfindung soll der Begriff "Silan" auch deren Hydrolyse-, Kondensations-, Polymerisations- und Reaktionsprodukte, also insbesondere Silanole, Siloxane und gegebenenfalls Polysiloxane einschließen. Der Begriff "Polysiloxan" soll hierbei auch die Kondensations-, Polymerisations- und Reaktionsprodukte des Polysiloxans einschließen.

Bei dem erfindungsgemäßen Verfahren enthält die Zusammensetzung in einzelnen Ausführungsformen einen Gehalt an mindestens einem **Silan/Silanol/Siloxan/Polysiloxan** oder an mindestens einem Silan/Silanol/Siloxan und vorzugsweise in einem Gehalt an mindestens einem Silan/Silanol/Siloxan/Polysiloxan von etwa Null oder im Bereich von 0,1 bis 50 g/L, von 0,5 bis 30 g/L, von 1 bis 20 g/L, von 2 bis 10 g/L oder von 3 bis 6 g/L berechnet als Si-Metall. Wenn der Gehalt an Silan/Silanol/Siloxan/Polysiloxan zu gering ist, kann sich in manchen Ausführungsformen der Korrosionsschutz der Beschichtung verschlechtern - insbesondere bei feuerverzinkten Oberflächen. Wenn der Gehalt an Silan/Silanol/Siloxan/Polysiloxan zu hoch ist, kann es zur Instabilität der Lösung und damit zu Ausfällungen oder/und zu unvollständiger Benetzung der metallischen Oberfläche führen. Ein Zusatz von und Gehalt an mindestens einem Tensid (Netzmittel) kann Problemen bei hohen Gehalten an Silan/Silanol/Siloxan/Polysiloxan vorbeugen, aber auch den Korrosionsschutz der erzeugten Beschichtung beeinträchtigen. Es wurde gefunden, dass ein Gehalt an mindestens einem Tensid die Eigenschaften der erfindungsgemäßen Beschichtung teilweise sehr stark beeinflussen kann, insbesondere im Korrosionsschutz. Der Korrosionsschutz lässt sich inbesondere bei weniger hochwertigen Qualitäten von feuerverzinkten Substraten (HDG) deutlich verbessern. Hierzu wird vorzugsweise mindestens ein nichtionisches Tensid zugesetzt, gegebenenfalls alternativ oder zusätzlich auch mindestens ein kationisches Tensid. Ein zweites Tensid kann gegebenenfalls als Lösungsvermittler wirken. Ein Silan/Silanol/Siloxan oder/und ein Polysiloxan, verbessert den Korrosionsschutz oft deutlich. Insbesondere wird in den meisten Ausführungsformen mindestens ein Silan zugesetzt, während mindestens ein Polysiloxan nur in einzelnen Ausführungsformen entweder allein oder zusätzlich zu mindestens einem Silan zugesetzt wird.

Vorzugsweise enthält die Zusammensetzung jeweils mindestens ein Silan/Silanol/Siloxan/Polysiloxan, insbesondere auf Basis von Alkoxysilan, Alkylsilan, Amidosilan, Aminosilan, Bis-silyl-silan, Epoxysilan, Fluorsilan, Imidosilan, Iminosilan, Isocyanatosilan, (Meth)acrylatosilan oder/und Vinylsilan. Unter diesen Silanen/Silanolen/Siloxanen/Polysiloxanen haben sich in mehreren Ausführungsformen solche auf Basis von Aminosilanen besonders bewährt, wobei jedoch auch die anderen hier genannten Silane/Silanole/Siloxane je nach Ausführungsform bedeutsam sein können. Beim Zusetzen von Silanen oder/und deren Derivaten, die gegebenenfalls nach weiterer Kondensation insbesondere bei etwas erhöhtem pH-Wert vorliegen wie z.B. auf Basis von Silanen/Silanolen/Siloxanen mit mindestens einer Stickstoff enthaltenden Gruppe wie z.B. von jeweils mindestens einer Aminogruppe (= Aminosilane), Amidogruppe, Iminogruppe oder/und Imidogruppe oder/und unter Aufnahme von Protonen mit mindestens einer Ammoniumgruppe, tragen diese Silane/Silanole/Siloxane zu einer Anhebung des pH-Werts bei. Auch dadurch kann der pH-Wert beispielsweise von ursprünglichen Werten im Bereich von 1 bis 2 oder 1,5 bis 3 auf Werte im Bereich von 1,5 bis 4 angehoben werden. Besonders bevorzugt ist ein Gehalt an Silanen/Silanolen/Siloxanen mit mindestens einer Stickstoff enthaltenden Gruppe wie z.B. von jeweils mindestens einer Aminogruppe (= Aminosilane), Amidogruppe, Iminogruppe oder/und Imidogruppe. Die Alkylsilane können insbesondere di-, tri- oder/und tetrafunktionell sein. Die Alkylsilane können insbesondere ohne organisch funktionelle Seitenkette sein oder können insbesondere eine endständige Stickstoff-haltige Gruppe aufweisen. Die Alkylsilane können gegebenenfalls ohne Seitenkette sein, können aber auch mindestens eine Seitenkette mit einer Kettenlänge von bis zu zehn C-Atomen aufweisen. Vorzugsweise enthält die wässerige Zusammensetzung in manchen Ausführungsformen jeweils einen Zusatz von und Gehalt an mindestens einer Verbindung auf Basis von mindestens einem Silan/Silanol/Siloxan/Polysiloxan a) mit mindestens einer Stickstoff enthaltenden Gruppe wie z.B. mindestens eine Aminogruppe oder Ammoniumgruppe, b) auf Basis von Bis-Silan(en), c) auf Basis von Epoxysilan(en), d) auf Basis von Fluorsilan(en), e) auf Basis von Isocyanatosilan(en), f) auf Basis von (Meth)acrylatosilan(en), g) auf Basis von Vinylsilan(en), h) auf Basis von Alkoxysilanen oder/und i) auf Basis von Alkylsilan jeweils im Bereich von 0,5 bis 160 g/L, besonders bevorzugt im Bereich von 1 bis 120, von 2 bis 80, von 3 bis 50, von 5 bis 35 oder von 8 bis 20 g/L berechnet als Si-Metall. Besonders bevorzugte Silane sind 3-aminopropyltriethoxysilan oder/und 3-aminopropyltrimethoxysilan (APS), N-[2-(aminoethyl)]-3-aminopropyltri-methoxysilan (AEAPS), Methylsilan, Butylsilan, Epoxysilan oder/und Tetraethoxysilan (TEOS). Bei manchen Silanen/Silanolen/Siloxanen/Polysiloxanen kann es bei höheren Fluorid-Gehalten zur Bildung von HF-Gas kommen.

Je nach Art und Grad der Polymerisation wie z.B. einer Kondensation können hierbei auch Siloxane oder/und Polysiloxane ausgebildet werden. Alternativ hat sich gezeigt, dass auch der Zusatz von und Gehalt an mindestens einem Polysiloxan oder auch der Zusatz einer Kombination auf Basis von Silan und Polysiloxan vorteilhaft sein kann.

Bei dem erfindungsgemäßen Verfahren enthält die Zusammensetzung mindestens ein organisches Polymer/Copolymer. Der Begriff Copolymer umfasst im Sinne dieser Anmeldung auch Blockcopolymere oder/und Pfropfcopolymere. Der Zusatz von und Gehalt an mindestens einer derartigen säuretoleranten organischen Verbindung ist bedeutsam, um den Korrosionsschutz, die Lackhaftung, die Umformbarkeit, die Reibung oder/und die Aufnahme von Öl-haltigen Verunreinigungen von der beölten oder/und verschmutzten metallischen Oberfläche zu verbessern. Letzteres dient oft dazu, eine Reinigung von beölten oder/und verschmutzten metallischen Oberflächen zu vermeiden. Hiermit kann gegebenenfalls eine geringe Menge an Dressiermittel aus einem Dressiervorgang, eine geringe Menge an Rostschutzöl einer Beölung aus Gründen des vorübergehenden Rostschutzes oder/und eine geringe Menge an Umformöl aus einem Umformvorgang auf einer erfindungsgemäß beschichteten metallischen Oberfläche aufgenommen werden. Die wässerige Zusammensetzung enthält einen Gehalt an mindestens einem säuretoleranten organischen Polymer/Copolymer im Bereich von 1 bis 500 g/L, besonders bevorzugt im Bereich von 5 bis 450 g/L, von 15 bis 400 g/L, von 25 bis 300 g/L, von 40 bis 280 g/L, von 60 bis 260 g/L, von 80 bis 240 g/L, von 100 bis 220 g/L, von 120 bis 200 g/L, von 140 bis 180 g/L oder von 150 bis 160 g/L. Vorzugsweise liegt der Gehalt an säuretolerantem organischen Polymer/Copolymer so hoch, dass die Umformbarkeit verbessert wird, wobei insbesondere die Reibung beim Umformen wesentlich verringert wird. Vorzugsweise liegt der Gehalt an säuretolerantem organischen Polymer/Copolymer in einer Größenordnung, dass die Stabilität der wässerigen Zusammensetzung erhalten bleibt und eine gute Oberflächenerscheinung der Beschichtung gewährleistet ist, so dass insbesondere keine matten oder/und streifigen Beschichtungen entstehen. Besonders bevorzugt entstehen transparente oder/und wenig oder nicht gefärbte Beschichtungen.

Besonders bevorzugt ist ein Zusatz an mindestens einem kationischen Polyurethanharz, das ein Polymer oder/und Copolymer ist und einen Anteil an Polyethylen oder/und an mindestens einem anderen Polymeren enthält.

Besonders bevorzugt ist ein Zusatz an modifiziertem anionischen Polyacrylat, das ein Polymer oder/und Copolymer ist und gegebenenfalls vorzugsweise einen Anteil an Polystyrol oder/und an mindestens einem anderen Polymeren enthält.

Die zuzusetzenden organischen Polymere oder/und Copolymere sollen jedoch eine Stabilität der wässerigen Zusammensetzung von mindestens fünf Tagen ermöglichen.

Bei dem erfindungsgemäßen Verfahren enthält die Zusammensetzung vorzugsweise jeweils mindestens eine anorganische oder/und organische Verbindung in Partikelform. Organische **Partikel** können insbesondere als Bestandteil von organischem Polymer/Copolymer vorhanden sein. Sie weisen oft Partikelgrößen im Bereich von 10 bis 300 nm auf. Vorzugsweise enthält die wässerige Zusammensetzung in manchen Ausführungsformen einen Gehalt an anorganischen oder/und organischen Partikeln im Bereich von 0,05 bis 120 g/L, besonders bevorzugt im Bereich von 0,1 bis 80 g/L, von 0,3 bis 50 g/L, von 1 bis 30 g/L, von 1,5 bis 15 g/L oder von 2 bis 10 g/L.

Vorzugsweise enthält die erfindungsgemäße Zusammensetzung mindestens eine anorganische Verbindung in Partikelform auf Basis von Al₂O₃, SiO₂, TiO₂, ZnO, ZrO₂, Glimmer, Tonmineral, Ruß oder/und Korrosionsschutzpartikeln, die einen mittleren Partikeldurchmesser kleiner 300 nm gemessen unter einem Rasterelektronenmikroskop aufweisen. Sie dienen insbesondere als Weißpigment(e), als Farbpigment(e) oder/und als Korrosionsschutzpig-ment(e). Die anorganischen Partikel wie z.B. solche auf Basis von Al₂O₃, SiO₂, TiO₂, ZrO₂, Glimmer oder/und Tonmineral wirken oft auch als Partikel mit Barriereeffekt und gegebenenfalls unter Anbindung zur metallischen Oberfläche. Sie können beispielsweise als Weißpigmente dienen, um die metallische Oberfläche abzudecken und einen hellen Film zu erzeugen. Bei Bedarf können aber auch Farbpigmente zugesetzt werden. Hierbei können z.B. ZnO-Partikel bis zu ihrer gegebenenfalls auftretenden Auflösung korrosionsschützend wirken. Die Korrosionsschutzpartikel können insbesondere solche auf Basis z.B. von Silicat, vor allem Alkalisilicat oder/und Erdalkalisilicat, aber auch auf Basis von Phosphaten, Phosphosilicaten, Molybdaten usw. sein. Korrosionsschutzpartikel können insbesondere aufgrund ihrer Barrierefunktion oder/und der Abgabe von Ionen helfen, korrosionsschützend zu wirken. Vorzugsweise liegt der Gehalt an anorganischen Partikeln so niedrig, dass noch keine störende Reibung beim Umformen auftritt. Vorzugsweise liegt der Gehalt an anorganischen Partikeln so hoch, dass die Partikel eine Barrierefunktion ausüben und ein erhöhter Korrosionsschutz erzielt wird.

In einzelnen Ausführungsformen enthält die erfindungsgemäße Zusammensetzung mindestens einen **Beschleuniger** wie z.B. mindestens einen Beschleuniger ausgewählt aus der Gruppe bestehend aus Beschleunigern auf Basis von Chlorat, Nitrit, Nitrobenzolsulfonat, Nitroguanidin, Perborat und mindestens einer anderen nitroorganischen Verbindung mit oxidierenden Eigenschaften, die vom Phosphatieren her bekannt sind. Diese Verbindungen können auch dazu beitragen, dass die Bildung von Wasserstoffgas an der Grenzfläche zur metallischen Oberfläche verringert oder vermieden wird. In manchen Ausführungsformen enthält die wässerige Zusammensetzung mindestens einen dieser Beschleuniger im Bereich von 0,05 bis 30 g/L, besonders bevorzugt im Bereich von 0,3 bis 20, von 1 bis 12, von 1,5 bis 8 oder von 2 bis 5 g/L.

Vorzugsweise enthält die erfindungsgemäße Zusammensetzung mindestens ein **Additiv** wie z.B. jeweils mindestens ein Netzmittel, einen Demulgator, einen Emulgator, einen Entschäumer, einen Korrosionsinhibitor oder/und einen UV-Absorber. Bei Bedarf kann mindestens ein weiteres Additiv zugesetzt werden, wie es bei Konversionsbeschichtungen, Passivierungen bzw. Lacken/Primern üblich und grundsätzlich bekannt ist. Vorzugsweise enthält die wässerige Zusammensetzung mindestens ein Additiv mit einem Gesamtgehalt der Additive im Bereich von 0,001 bis 50 g/L, besonders bevorzugt im Bereich von 0,01 bis 30, von 0,1 bis 10, von 0,5 bis 6 oder von 1 bis 3 g/L.

Die Aufgabe wird auch gelöst mit einer wässerigen Zusammensetzung entsprechend dem Hauptanspruch.

Die Aufgabe wird ferner gelöst mit einer Beschichtung hergestellt nach dem erfindungsgemäßen Verfahren oder/und mit einer erfindungsgemäßen wässerigen Zusammensetzung.

Hierbei kann die wässerige Zusammensetzung in weiten Bereichen schwanken. Vorzugsweise weist sie
a) 1 bis 250 g/L an Phosphat berechnet als PO₄ oder 0,75 bis 185 g/L an Phosphat berechnet als P₂O₅,
b) 0,1 bis 50 g/L an mindestens einer Titan- oder/und ZirkoniumVerbindung berechnet als Ti-Metall,
c) 0,1 bis 60 g/L an mindestens einem Komplexbildner,
d) 0,5 bis 80 g/L an Kationen von Aluminium, Chrom(III) oder/und Zink oder/und an mindestens einer Verbindung mit einem Gehalt an Aluminium, Chrom(III) oder/und Zink sowie
e) 1 bis 500 g/L an mindestens einem säuretoleranten, kationischen oder nichtionischen organischen Polymer/Copolymer bezogen auf den Gehalt der Fest- und Wirkstoffe auf.

Vorzugsweise enthält die erfindungsgemäße Zusammensetzung:
15 bis 400 g/L organische Polymere/Copolymere e),
1 bis 50 g/L oder 0 g/L Gleitmittel f),
1 bis 50 g/L AI, Cr(III) oder/und Zn d) zusammen,
2 bis 200 g/L Phosphat als PO₄,
1,5 bis 150 g/L Phosphat als P₂O₅,
1 bis 40 g/L Komplexbildner c),
0,5 bis 30 g/L Ti oder/und Zr b) zusammen berechnet als Ti-Metall sowie gegebenenfalls
1 bis 50 oder in etwa Null g/L F aus mindestens einer Fluor-Verbindung (F_{gesamt}) oder/und
0,5 bis 30 oder in etwa Null g/L Silicium-Verbindung(en) berechnet als Si-Metall
sowie gegebenenfalls noch mindestens eine der weiteren in dieser Anmeldung genannten Verbindungen.

Besonders bevorzugt enthält die wässerige Zusammensetzung:
25 bis 300 g/L organische Polymere/Copolymere e),
2 bis 30 g/L oder 0 g/L Gleitmittel f),
2 bis 30 g/L Al, Cr(III) oder/und Zn d) zusammen,
3 bis 120 g/L Phosphat als PO₄,
2,2 bis 90 g/L Phosphat als P₂O₅,
2 bis 18 g/L Komplexbildner c),
1 bis 15 g/L Ti oder/und Zr b) zusammen berechnet als Ti-Metall sowie gegebenenfalls
2 bis 25 oder in etwa Null g/L F aus mindestens einer Fluor-Verbindung (F_{gesamt}) oder/und
2 bis 5 oder in etwa Null g/L Silicium-Verbindung(en) berechnet als Si-Metall
sowie gegebenenfalls noch mindestens eine der weiteren in dieser Anmeldung genannten Verbindungen.

Diese Gehaltsangaben gelten sowohl für Konzentrate, als auch für Bäder. Bei Bädern können alle oben genannten Angaben zu den Bereichen jeweils beispielsweise durch den Verdünnungsfaktor von z.B. 1, 2 oder 4 geteilt werden.

Vorzugsweise liegt das Gewichtsverhältnis von (Al, Cr³⁺, Fe, Mn und Zn) : (Ti und Zr) oder/und von (Al, Cr³⁺ und Zn) : (Ti und Zr) im Bereich von 0,1 : 1 bis 3 : 1. Besonders bevorzugt liegen diese Gewichtsverhältnisse im Bereich von 0,5 : 1 bis 2,5 : 1 oder von 1 : 1 bis 2 : 1.

Neben den zugesetzten Gehalten insbesondere von Aluminium, Chrom(III), Eisen, Mangan, Titan, Zink oder/und Zirkonium können diese und gegebenenfalls auch weitere Kationen in der erfindungsgemäßen Zusammensetzung enthalten sein: Einerseits durch Einschleppen z.B. aus vorherigen Bädern, durch Verunreinigungen oder/und durch Herauslösen z.B. aus Tank-und Rohrmaterialien sowie aus den zu beschichtenden Oberflächen, andererseits durch Zugabe weiterer Kationen/Verbindungen mit einem Metallgehalt wie z.B. mindestens ein Alkalimetall, Molybdän oder/und Vanadium.

Vorzugsweise ist die erfindungsgemäße wässerige Zusammensetzung in vielen Ausführungsformen frei oder im Wesentlichen frei von Verbindungen auf Basis von Epoxid, Phenol, Stärke, Chrom(VI) oder/und auf Basis von weiteren Schwermetallen wie z.B. solchen auf Basis von Chrom, Molybdän, Nickel, Vanadium oder/und Wolfram. Vorzugsweise ist die erfindungsgemäße wässerige Zusammensetzung in vielen Ausführungsformen frei oder im Wesentlichen frei von Verbindungen, die beim Phosphatieren als Beschleuniger eingesetzt werden, insbesondere von Verbindungen auf Basis von Chlorat, Nitrit, Nitroguanidin, Peroxid oder/und weiteren N-haltigen Beschleunigern.

Die erfindungsgemäßen Zusammensetzungen sind vorzugsweise frei oder im Wesentlichen frei von Chrom(VI). Sie können aber auch bei einem Teil der erfindungsgemäßen Zusammensetzungen gegebenenfalls auch frei oder im Wesentlichen frei von Chrom(III), insbesondere dann gegebenenfalls frei oder im Wesentlichen frei von Kationen oder/und Verbindungen von Chrom sein.

Vorzugsweise enthält die wässerige Zusammensetzung keinen oder nur einen Gehalt an Calcium oder/und Magnesium von nicht mehr als 0,5 g/L, besonders bevorzugt von nicht mehr als 0,15 g/L, oder/und keinen oder nur einen Gehalt an mindestens einem giftigen bzw. umweltunfreundlichen Schwermetall wie z.B. Chrom von nicht mehr als 0,5 g/L, besonders bevorzugt von nicht mehr als 0,15 g/L. In Fluorid-freien Zusammensetzungen kann auch ein gewisser oder höherer Gehalt an Calcium oder/und Magnesium enthalten sein.

Die erfindungsgemäße Zusammensetzung weist vorzugsweise einen pH-Wert im Bereich von 2,5 bis 4 oder von 3 bis 3,5 auf. Ein geringer pH-Wert ist hierbei in vielen Ausführungsformen bevorzugt, um einen hohen Beizeffekt zu erzeugen und einen hohen Anteil der herausgebeizten Kationen in die Beschichtung zu übernehmen oder/und in einer Beschichtung unter oder in einer polymeren Beschichtung auszubilden, so dass die Konversionswirkung trotz eines hohen Anteils an organischen Polymeren/Copolymeren in der Zusammensetzung deutlich erhalten bleibt. Andererseits ist darauf zu achten, dass sich die Gehalte an herausgebeizten Kationen nicht stärker negativ auf den Korrosionsschutz auswirken.

Vorzugsweise werden dem wässerigen Konzentrat zur Herstellung einer wässerigen Zusammensetzung alle oder die meisten Verbindungen, die auch in der Lösung in entsprechenden Bestandteilen enthalten sind, als Zusätze zugegeben. Die Zusammensetzung des Bades wird vorzugsweise durch Verdünnen des wässerigen Konzentrats mit 10 bis 1000 % vom Fest-und Wirkstoffgehalt des Konzentrats mit Wasser aus dem wässerigen Konzentrat hergestellt. Aber auch eine hochkonzentrierte oder/und unverdünnte Suspension oder Emulsion kann in manchen Ausführungsformen vorteilhaft eingesetzt werden.

Oberflächen von allen metallischen Werkstoffen können erfindungsgemäß beschichtet werden. Vorzugsweise werden metallische Oberflächen aus Aluminium, Eisen, Kupfer, Magnesium, Titan, Zink, Zinn oder/und deren Legierungen beschichtet, insbesondere Zink-, Stahl-, feuerverzinkte (hot dip galvanized, HDG), elektrolytisch verzinkte, Galvalume®-, Galfan®- oder/und Alusi®-Oberflächen. Die erfindungsgemäße Zusammensetzung hat sich vor allem bei Zink-reichen oder/und Aluminium-reichen metallischen Oberflächen hervorragend bewährt. Die nach dem erfindungsgemäßen Verfahren beschichteten metallischen Komponenten können insbesondere im Fahrzeugbau, als Architekturelemente im Bauwesen oder zur Fertigung von Geräten und Maschinen wie z.B. elektrotechnische Geräte oder Haushaltsgeräte verwendet werden. Als zu beschichtende metallische Gegenstände eignen sich insbesondere Anbauteile, Bänder, Bleche, Formteile, Gussteile, Kleinteile wie z.B. Schrauben und Profile.

Als Temperatur der wässerigen Zusammensetzung beim Beschichten eignen sich insbesondere 10 bis 40 °C. Als Temperatur des Substrates beim Beschichten eignen sich insbesondere 10 bis 40 °C.

Die erfindungsgemäß hergestellte **Beschichtung** kann eine in weiten Grenzen variierende Beschichtungszusammensetzung aufweisen. Insbesondere kann sie dadurch gekennzeichnet sein, dass sie enthält:

| | |
|---|---|
| Organisches Polymer/Copolymer, | 50 bis 15000 mg/m², |
| Gleitmittel Null oder | 3 bis 2000 mg/m², |
| AI, Cr oder/und Zn berechnet als Metall | 1 bis 400 mg/m², |
| Summe Ti oder/und Zr berechnet als Ti-Metall | 1 bis 300 mg/m², |
| Phosphat berechnet als PO₄ | 4 bis 1600 mg/m², |
| Phosphat berechnet als P₂O₅ | 3 bis 1200 mg/m² und |
| Si-Verbdg(n). berechnet als Si-Metall etwa | 0 oder 0,5 bis 150 mg/m². |
| Besonders bevorzugt enthält die erfindungsgemäße Beschichtung: | 250 bis 8000 mg/m², |
| OrganischesPolymer/Copolymer, Gleitmittel Null oder | 10 bis 1000 mg/m², |
| Al, Cr oder/und Zn berechnet als Metall | 10 bis 250 mg/m², |
| Summe Ti oder/und Zr berechnet als Ti-Metall | 10 bis 180 mg/m², |
| Phosphat berechnet als PO₄40 bis | 1100 mg/m², |
| Phosphat berechnet als P₂O₅ | 30 bis 800 mg/m² und |
| Si-Verbdg(n). berechnet als Si-Metall etwa | 0 oder 5 bis 100 mg/m². |

Diese Gehalte können über ein röntgenfluoreszenzanalytisches Verfahren an einem zurechtgeschnittenen beschichteten Blech bestimmt werden. Hierbei kann das Gewichtsverhältnis von (AI, Cr³⁺ und Zn) : (Ti und Zr) der Beschichtungszusammensetzung vorzugsweise im Bereich von 0,5 : 1 bis 1,8 : 1 liegen, besonders bevorzugt im Bereich von 0,9 : 1 bis 1,4 : 1.

Das **Schichtgewicht** der erfindungsgemäß ausgebildeten Schicht kann in weiten Grenzen variieren. Es kann im Bereich von 0,01 bis 50, von 0,05 bis 30 g/m², von 0,1 bis 20 g/m², von 0,3 bis 12 g/m², von 0,5 bis 10 g/m², von 0,8 bis 8 g/m², von 1 bis 6 g/m², von 1,2 bis 5 g/m², von 1,5 bis 4 g/m² oder von 1,8 bis 3 g/m² oder von 2 bis 2,5 g/m² liegen. Es kann bei Beschichtung in Bandanlagen insbesondere im Bereich von 10 bis 50000 mg/m² liegen, vorzugsweise im Bereich von 500 bis 20000, besonders bevorzugt im Bereich von 700 bis 12000 oder von 900 bis 6000, ganz besonders bevorzugt im Bereich von 1000 bis 2000 mg/m². Der Gesamtgehalt an Titan oder/und Zirkonium im Trockenfilm liegt bei Beschichtung in Bandanlagen vorzugsweise im Bereich von 1 bis 100 mg/m² an Ti oder/und Zr berechnet als Ti-Metall, besonders bevorzugt im Bereich von 10 bis 60 mg/m². Der Gesamtgehalt an Titan oder/und Zirkonium kann beispielsweise mit Röntgenfluoreszenz gemessen werden. Der Gesamtgehalt an Silicium im Trockenfilm liegt bei Beschichtung in Bandanlagen vorzugsweise im Bereich von 1 bis 80 mg/m² an Si berechnet als Metall, besonders bevorzugt im Bereich von 3 bis 40 mg/m². Der Gesamtgehalt an P₂O₅ im Trockenfilm liegt bei Beschichtung in Bandanlagen vorzugsweise im Bereich von 30 bis 400 mg/m² an P₂O₅, besonders bevorzugt im Bereich von 60 bis 300 mg/m².

Die Dicke der erfindungsgemäßen Beschichtungen liegt bei einer Beschichtung in Bandanlagen oft im Bereich von 0,01 bis 40 µm, von 0,1 bis 20 µm, von 0,3 bis 15 µm, von 0,5 bis 10 µm oder von 3 bis 10 µm, insbesondere im Bereich von 0,5 bis 6,5, von 0,8 bis 4,5 oder von 1 bis 3 µm. Bei einer Beschichtung in anderen Anlagen als Bandanlagen wie zur Beschichtung von Teilen liegt die Dicke der Beschichtung oft im Bereich von 0,1 bis 50 µm oder von 0,2 bis 20 µm oder von 0,3 bis 15 µm, insbesondere im Bereich von 0,5 bis 2, von 0,8 bis 1,8 oder von 1 bis 1,5 µm.

Die erfindungsgemäßen wässerigen Zusammensetzungen weisen häufig eine Konzentration der Fest- und Wirkstoffe (Gesamtkonzentration) im Bereich von 10 bis 800 g/L auf. Ein Konzentrat kann oft eine Gesamtkonzentration im Bereich von 200 bis 800 g/L aufweisen, insbesondere von 400 bis 750 g/L. Es kann bei Bedarf mit Wasser verdünnt werden. Die Verdünnung eines Konzentrats erfolgt vorzugsweise um einen Faktor im Bereich von 1,1 bis 25, besonders bevorzugt im Bereich von 1,5 bis 16, von 2 bis 10 oder von 3 bis 6. Der einzustellende Gehalt an Fest- und Wirkstoffen in der wässerigen Zusammensetzung ist vor allem von der zu beschichtenden Substratart, von der jeweiligen Anlage und von der durch die Anlage bedingten Nassfilmdicke abhängig.

In vielen Ausführungsformen wird die erfindungsgemäße Zusammensetzung auf metallischem **Band** (Coil) in Bandbeschichtungsverfahren eingesetzt. Viele der Bandanlagen weisen eine Bandgeschwindigkeit im Bereich von 10 bis 200 m/min auf. Je schneller das Band gefahren wird, desto schneller müssen die Reaktionen zwischen der erfindungsgemäßen Zusammensetzung und der metallischen Oberfläche stattfinden, um keine zu langen Anlagenabschnitte zu benötigen. Die Reaktionszeit zwischen dem Auftragen der Zusammensetzung und ihrem vollständigen Eintrocknen kann vom Bruchteil einer Sekunde bis zu etwa 60 Sekunden dauern. Das kann insbesondere bei den schnelleren Bandanlagen bedingen, dass die wässerige Zusammensetzung zu wenig reaktiv ist und daher eine stärkere Azidität und stärkere Beizkraft aufweisen muss. Bevorzugt liegt ihr pH-Wert im Bereich von 1,5 bis 3,5 bei Bandbeschichtungsverfahren. Die Konzentration aller Fest- und Wirkstoffe der wässerigen Zusammensetzung für die Beschichtung in Bandanlagen liegt oft im Bereich von 200 bis 800 oder von 300 bis 650 g/L. Entsprechend den Gesamtgehalten werden die Gehalte an einzelnen Komponenten bzw. Zusätzen angepasst. Üblicherweise wird die wässerige Zusammensetzung auf dem sauberen oder gereinigten metallischen Band durch Aufsprühen und Abquetschen oder durch Tauchen und Abquetschen als Nassfilm aufgebracht, der oft eine Nassfilmdicke im Bereich von 1 bis 12 µm aufweist. Hierzu kann zur Applikation stattdessen ein Chemcoater oder Rollcoater eingesetzt werden.

In vielen Ausführungsvarianten wird der Nassfilm auf metallischen Bändern oder Blechen aufgetragen und aufgetrocknet **(Auftrocken- oder no-rinse-Verfahren).** Das Auftrocknen kann vorzugsweise in einem Temperaturbereich von etwa Raumtemperatur bis etwa 120 °C Peak Metal Temperature (PMT) erfolgen, vorzugsweise in einem Temperaturbereich von 50 bis 100 °C oder von 70 bis 100 °C. Die erfindungsgemäße Zusammensetzung kann z.B. durch geeignete Konzentration und geeigneten pH-Wert speziell für eine langsame oder schnelle Behandlung in einer Bandanlage ausgerichtet werden. So wird weder der Nassfilm, noch der aufgetrocknete Film mit Wasser gespült, so dass die aus der metallischen Oberfläche herausgebeizten Kationen und Verbindungen nicht entfernt, sondern in die Beschichtung eingebaut werden.

Bei der erfindungsgemäßen Beschichtung von metallischen Teilen wie z.B. Blechabschnitten, Gussteilen, Formkörpern und kompliziert geformten Teilen kann die Reaktionszeit zwischen dem ersten Kontaktieren der Zusammensetzung bis zu ihrem vollständigen Eintrocknen (no-rinse-Verfahren) oder bis zum Abspülen der durch Spülen mit Wasser entfernbaren Bestandteile (rinse-Verfahren) vorzugsweise 0,5 bis 10 Minuten dauern. Längere Zeiten sind grundsätzlich möglich. Die Konzentration aller Fest- und Wirkstoffe der wässerigen Zusammensetzung liegt oft im Bereich von 10 bis 500 oder von 30 bis 300 g/L. Insbesondere bei gespülten Beschichtungen kann es sich manchmal empfehlen, die Beschichtungen mit einer Nachspüllösung zu behandeln, da beim Spülen mit Wasser oft viel entfernt wird. Anstelle einer Schichtausbildung kann es bei manchen Zusammensetzungen auch dazu kommen, dass im Kontakt mit der erfindungsgemäßen Zusammensetzung im Wesentlichen nur ein Beizeffekt oder/und nur eine sehr dünne Beschichtung auftritt, so dass z.B. bei feuerverzinkten Oberflächen an Zink-Korngrenzen das Zink-Kristallisationsbild erkennbar wird.

Es war aufwändig, mehr als ein einziges Polymer/Copolymer, das in den erfindungsgemäßen Zusammensetzungen nicht schon beim Zumischen ausfällt und längere Zeit stabil ist, also ein säuretolerantes Polymer/Copolymer, zu finden. Es war dann überraschend, dass eines dieser säuretoleranten Polymere/Copolymere das Eigenschaftsspektrum der erzeugten Beschichtungen derart stark veränderte und verbesserte (siehe **Figuren 1 und 2).**

Es war bereits bei DE 102008000600 A1 überraschend, dass die unmodifizierte Passivierungsbeschichtung im Gegensatz zu einer Phosphatschicht einen ungewöhnlich starken Blankkorrosionsschutz bietet, auch wenn die Beschichtung gegebenenfalls sogar dünner als eine Phosphatschicht ist und auch wenn sie chromfrei ist. Im Vergleich hierzu war der Blankkorrosionsschutz der unmodifizierten Passivierungsbeschichtungen oft mindestens um den Zeitfaktor 20 oder 30 besser als bei vergleichbaren zinkphosphatierten Beschichtungen.

Es war jetzt überraschend, dass die hochwertigen Eigenschaften der Zusammensetzungen und Beschichtungen der DE 102008000600 A1 jetzt noch drastisch gesteigert werden konnten, wie die Figuren 1 und 2 sowie die Beispiele belegen, und dass die Eigenschaften und das Eigenschaftsspektrum so erheblich verbessert werden konnten, dass die Einsatzmöglichkeiten der hiermit beschichteten Substrate wesentlich erweitert werden.

Es war überraschend, dass die erfindungsgemäße wässerige Zusammensetzung so lange so stabil ist, dass sie als einkomponentiges Produkt zum Verkauf angeboten werden kann, was ein sehr großer Vorteil im Vergleich zu den unmodifizierten Passivierungen der DE 102008000600 A1 ist. Denn es hat sich gezeigt, dass bei der erfindungsgemäßen Zusammensetzung kein Zusatz getrennt gehalten werden muss, um das Produkt lange stabil halten zu können. Daher ist die erfindungsgemäße Zusammensetzung viel einfacher zu handhaben als ein zweikomponentiges Produkt, bei dem zumindest ein Zusatz separat gelagert und kurz vor dem Einsatz der unmodifizierten Passivierung zugemischt werden muss.

Es war überraschend, dass der Zusatz eines kationischen Polyurethanharzes zu der erfindungsgemäßen Zusammensetzung so herausragende Eigenschaften der damit hergestellten Beschichtungen ergeben hat.

Es war überraschend, dass die erfindungsgemäße Zusammensetzung auch bei einem mittleren Gehalt an Komplexbildner und auch bei einem sehr hohen Gehalt an Fest- und Wirkstoffen ungewöhnlich stabil ist.

Es war überraschend, dass eine erfindungsgemäß modifizierte stabile Zusammensetzung es ermöglicht, dass die Oberflächenästhetik des Substrats nahezu unverändert erkennbar bleibt. Hierdurch kann beispielsweise die Kornstruktur durch die erfindungsgemäße Beschichtung gut gesehen werden.

Die erfindungsgemäße Zusammensetzung und das erfindungsgemäße Verfahren können insbesondere verwendet werden:
- Als Passivierungsmittel zum Passivieren der metallischen Oberflächen, wobei die Passivierungsbeschichtungen oft Schichtdicken im Bereich von 0,03 bis 8 µm oder von 0,3 bis 5 µm aufweisen,
- als Vorbehandlungsmittel zum Vorbehandeln vor einer nachfolgenden Beschichtung wie z.B. vor einer organischen Beschichtung wie z.B. einem Lack, wobei die Vorbehandlungsbeschichtung oft Schichtdicken im Bereich von 0,1 bis 8 µm oder von 0,3 bis 3 µm aufweisen,
- als Nachspülzusammensetzung zum Nachspülen z.B. zum Abdichten, zum Schützen oder/und zum Verbessern der Eigenschaften einer vorherigen Beschichtung wie z.B. einer Konversionsbeschichtung oder einer Beschichtung vom Anodisieren, wobei die Nachspül-Beschichtungen oft Schichtdicken im Bereich von 0,03 bis 5 µm oder von 0,3 bis 2 µm aufweisen,
- zum Herstellen von Dünnfilmbeschichtungen, die oft eine Schichtdicke im Bereich von 0,1 bis 5 µm oder von 0,6 bis 2,5 µm aufweisen, wie z.B. Beschichtungen des Permanent Coating oder/und von Primern,
- zum Herstellen von Dickfilmbeschichtungen, die oft eine Schichtdicke im Bereich von 5 bis 60 µm, von 8 bis 40 µm oder von 12 bis 25 µm aufweisen, wie z.B. Beschichtungen von Primern,
- als Pretreatmentprimer zum Herstellen von Beschichtungen ohne vorherige Vorbehandlung mit einer Konversionsbeschichtung (= Pretreatmentprimer-Beschichtungen), die oft eine Schichtdicke im Bereich von 0,1 bis 30 µm, von 1 bis 20 µm oder von 3 bis 12 µm aufweisen,
- zum Herstellen von Beschichtungen auf galvanisch oder/und stromlos hergestellten metallischen Beschichtungen, die oft eine Schichtdicke im Bereich von 0,1 bis 20 µm oder von 0,5 bis 12 µm aufweisen, und
- zur Beschichtung von metallischen oder/und nichtmetallischen Oberflächen, insbesondere für die gleichzeitige Beschichtung von metallischen und nichtmetallischen Oberflächen oder/und zum Schutz von metallischen oder/und nichtmetallischen Oberflächen.

Die erfindungsgemäße wässerige Zusammensetzung kann vor allem als Passivierungsmittel, als Vorbehandlungsmittel, als Nachspülzusammensetzung, für die Herstellung von Dünnfilmbeschichtungen, für die Herstellung von Dickfilmbeschichtungen, als Primer, als Pretreatmentprimer oder/und zur Beschichtung von metallischen oder/und nichtmetallischen Oberflächen verwendet werden.

Die erfindungsgemäße Beschichtung kann vor allem als Passivierungsbeschichtung, als Vorbehandlungsbeschichtung, als Nachspül-Beschichtung, als Dünnfilmbeschichtung, als Dickfilmbeschichtung, als Pretreatmentprimer-Beschichtung oder/und zum Schutz von metallischen oder/und nichtmetallischen Oberflächen verwendet werden.

### Beispiele und Vergleichsbeispiele:

Die im Folgenden beschriebenen Beispiele (B) und die Vergleichsbeispiele (VB) sollen den Gegenstand der Erfindung näher erläutern.

Es wurden wässerige Zusammensetzungen angemischt, deren Zusammensetzungen in den Tabellen 1 als Konzentrate wiedergegeben werden. Der Verdünnungsfaktor verdeutlicht die Verdünnung des Konzentrats auf die eingesetzte Badkonzentration, das heißt von einem Konzentrat auf ein Bad, so dass bei einem Konzentrat z.B. 200 g verwendet wurden und mit Wasser auf 1000 g verdünnt wurden unter Verwendung des Verdünnungsfaktors 5. Der Verdünnungsfaktor "-" bedeutet, dass die angegebene Zusammensetzung ohne weitere Verdünnung mit Wasser verwendet wurde, wie sie mit ihren Gehalten für dieses Beispiel in der Tabelle angegeben ist. In anderen Beispielen wurde um einen Faktor bis zu 2 mit deionisiertem Wasser verdünnt. Dagegen wurde bei den Tabellen 2 die Badzusammensetzung angegeben.

Mangan wurde als Mangancarbonat oder/und Manganoxid, Zink als Monozinkphosphat oder/und Zinkoxid zugesetzt. Als Silan 1 wurde 3-aminopropyltriethoxysilan (APS) zugesetzt. Als Komplexbildner 1 wurde 1-Hydroxyethan-1,1-diphosphonsäure (HEDP) und als Komplexbildner 2 L-(+)-Weinsäure verwendet. Die Homogenität und Eignung der Applikationsflüssigkeit wurde wesentlich durch den Zusatz des Komplexbildners 2 beeinflusst. Als Korrosionsinhibitor wurde ein Ammoniummolybdatsalz zu Anorganik-Blend 2 zugegeben. Als Titan- oder/und Zirkoniumverbindung wurden Hexafluorotitansäure, Hexafluorozirkonsäure oder/und Dihydroxo-bis-(ammoniumlactat)titanat zugesetzt.

Ausgehend von der wässerigen anorganischen Zusammensetzung des Vergleichsbeispiels VB0 in Tabelle 1, die sich hervorragend als Passivierungsmittel eignet, wurden verschiedene Mengen und Arten an säuretoleranten Polymeren/Copolymeren zusammen mit Wachs und zugehörigen Additiven zugesetzt. Diese Polymere/Copolymere eignen sich hierfür hervorragend, da sie auch bei pH-Werten im Bereich von 1,5 bis 3 stabil sind, da beim Einmischen dieser Substanzen keine Ausfällungen in der wässerigen Zusammensetzung auftraten und da die hiermit hergestellten Dispersionen über mindestens 4 Wochen, meistens sogar über mehr als 4 Monate stabil waren. Als Polymere/Copolymere dienten säuretolerante, nichtionische oder/und kationische Harze. Für die Versuche wurde ein kationisches Polyurethanharz mit einem Gehalt an Polycarbonatpolyol als Dispersion (Mindestfimbildungstemperatur MFT ca. - 5 °C, Elastizität bei 100 % ca. 13 MPa, Verlängerung 230 %) und ein modifiziertes anionisches Acrylharz (T_{g} ca. 35 °C, MFT ca. 30 °C, relativ hart, da Pendelhärte nach König 70-120 s) verwendet.

Als Gleitmittel wurde eine Wachsemulsion auf Basis von kationisch stabilisiertem oxidierten Polyethylen mit einem Schmelzpunkt bei ca. 125 °C eingesetzt.

Als Netzmittel zur Verbesserung der Substratbenetzung während der Nassfilmapplikation wurde ein Polysiloxan eingesetzt. Als Entschäumer diente ein Gemisch aus aliphatischen Kohlenwasserstoffen mit SiO₂. Um den Reibkoeffizienten der erfindungsgemäßen Beschichtung weiter abzusenken, wurde mindestens ein Glykol, insbesondere ein Polyethylenglykolether mit 10 C-Atomen, zugegeben. Die Einstellung des pH-Wertes erfolgte gegebenenfalls mittels wässeriger Ammoniak-Lösung. Die Angaben des pH-Werts in Tabelle 1 gelten gleichzeitig für Konzentrate und für Badkonzentrationen. Beim Verdünnen der Konzentrate zur Herstellung von Badlösungen wurde darauf geachtet, dass keine Niederschläge auftraten. Die Konzentrate und Badlösungen wurden vor ihrem Einsatz eine bis 24 Stunden bei Raumtemperatur gelagert.

### Erfindungsgemäße Beispiele B1 - B18 sowie Vergleichsbeispiel VB0:

Dann wurden jeweils mehrere Bleche aus feuerverzinktem Stahl (HDG) und in nicht detailliert aufgeführten Beispielen auch Bleche aus kaltgewalztem Stahl (CRS), aus Galvalume® (AZ), aus Galfan® (ZA) und aus Alusi® (AS) verwendet und getestet.

Die Bleche wurden mit einem Tuch vorgereinigt, um anhaftendes Korrosionsschutzöl weitgehend zu entfernen und um eine gleichmäßige Verteilung des Öls bzw. anderer Verschmutzungen zu erzielen. Anschließend wurden die Bleche im Spritzen mit einem mildalkalischen, Silicat-freien Pulverreiniger gereinigt, bis eine vollständige Benetzbarkeit mit Wasser vorlag. Die Dauer hierfür betrug im Allgemeinen 20 bis 30 s. Anschließend erfolgten ein Spülen mit Stadtwasser im Tauchen, 6 s ein Spülen mit Stadtwasser im Spritzen und 6 s ein Spülen mit VE-Wasser. Die Hauptmenge des anhaftenden Wassers wurde anschließend durch Abquetschen zwischen zwei Gummiwalzen von den Blechen entfernt. Anschließend wurden die Bleche mit Öl-freier Druckluft trocken geblasen.

Die trockenen Bleche wurden mit Hilfe eines Labor-Rollcoaters mit der wässerigen Zusammensetzung von etwa 25 °C in Kontakt gebracht. Es wurde ein Nassfilm von etwa 9 bis 10 µm Dicke aufgebracht. Durch Auftrocknen dieses Nassfilms bei 70 °C PMT wurde ein Trockenfilm von 0,2 bis 0,6 µm Dicke erzeugt. Hierzu wurden die derart behandelten Bleche bei etwa 40 bzw. 65 °C PMT getrocknet. Anschließend wurden die Ränder der beschichteten Bleche mit handelsüblichem Klebeband abgeklebt, um Kanteneffekte während der Korrosionsprüfung auszuschließen.

Die beschichteten Bleche wurden dann im Kondenswasser-Konstantklima-Test (KK-Test, heute CH-Test für constant humidity test genannt) nach DIN EN ISO 6270-2 und in der neutralen Salzsprühnebelprüfung (NSS-Test) nach DIN EN ISO 9227 auf ihren Blankkorrosionsschutz geprüft. Die Auswertung erfolgte visuell. Die angegebenen Werte für die Korrosion entsprechen dem prozentualen Flächenanteil, der der gesamten, der chemischen Belastung zugänglichen Fläche (100 %) entspricht.

Der Reibkoeffizient wurde nach einer firmenspezifischen Methode bestimmt. Es wird hierbei der Kraftaufwand gemessen, der für die seitliche Bewegung von zwei aufeinander gelegten beschichteten Blechen nötig ist.

Die Beständigkeit gegen Reinigungsmittel, Kühlmittel, Äthanol und deionisiertes Wasser wurde durch Tränken eines Tuches mit dem Medium und durch definiertes Reiben unter Druck bestimmt und ist im praktischen Einsatz wegen der chemischen Resistenz abgeschätzt über die Lebenszeit von Bedeutung. Denn organische Beschichtungen können diesbezüglich ihre Qualität im Vergleich zu anorganischen Beschichtungen einbüßen.

Die Antifingerprint-Eigenschaften wurden durch Eintauchen in eine künstliche Handschweißprüflösung nach BSH-Prüfnorm LV 02 C Abschnitt 6.2.2. vom 01.03.2007 ermittelt. Sie verdeutlichen, dass die die durch Fingerabdrücke hinterlassenen Chemikalien nicht zu sichtbaren Veränderungen wie Verfärbungen oder zu Korrosionserscheinungen führen.

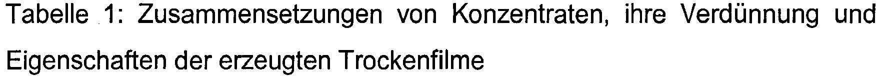

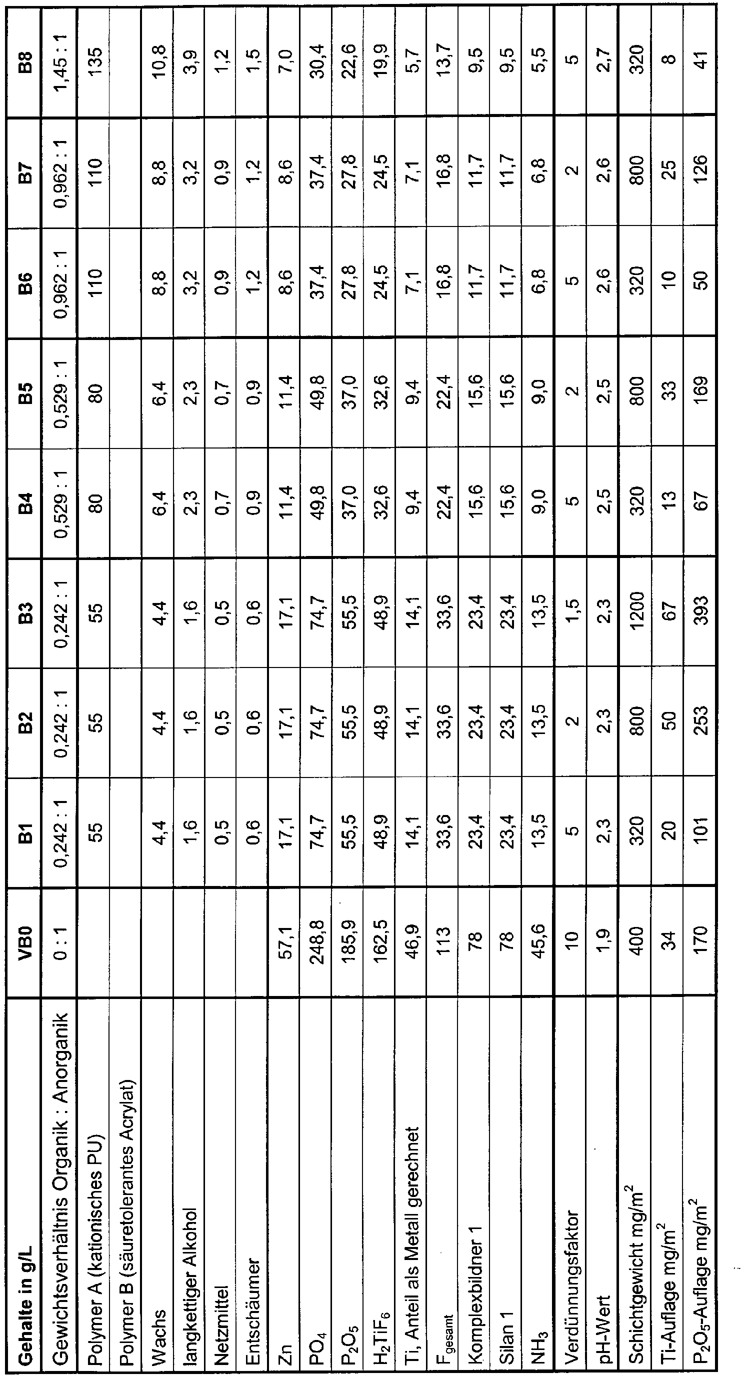

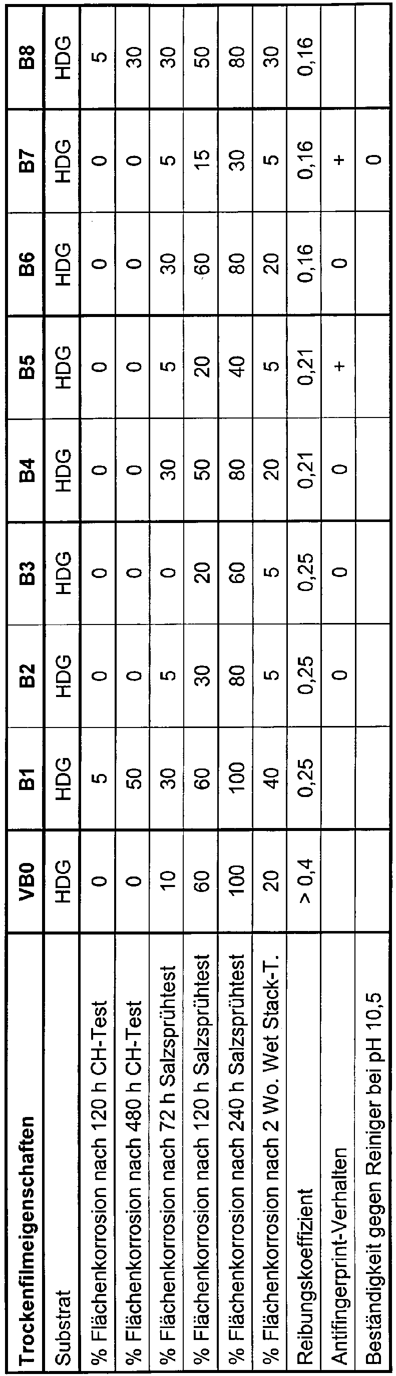

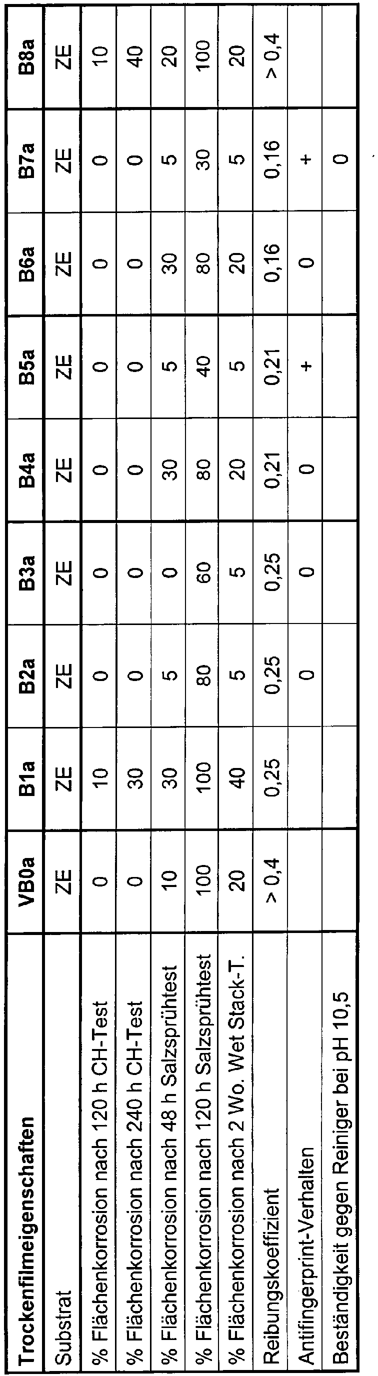

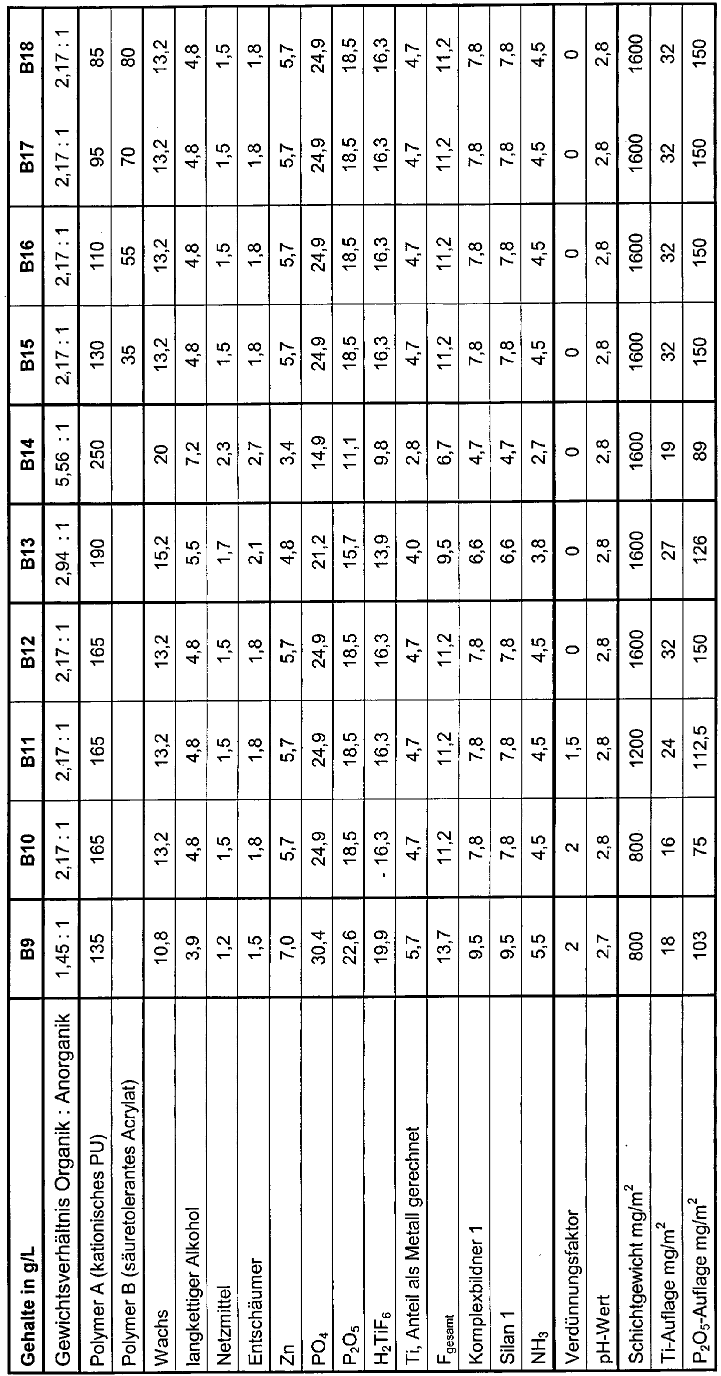

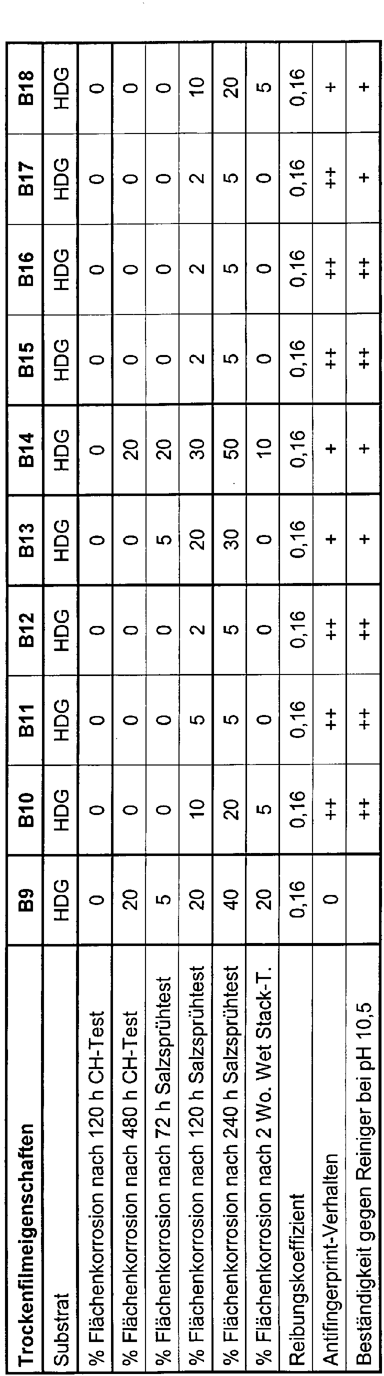

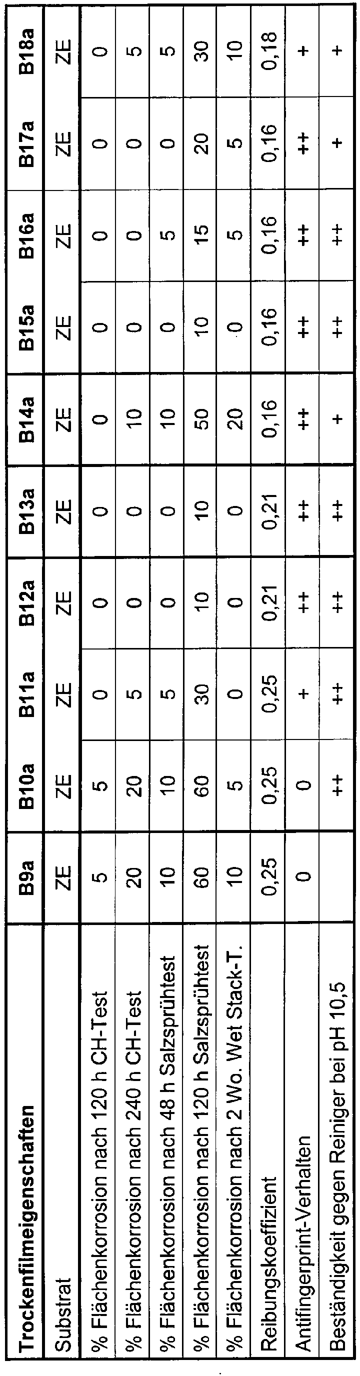

Zu den Beispielen und zum Vergleichsbeispiel der Tabelle 1:

Bei den erfindungsgemäßen Beispielen B2 bis B4 wurde ein Konzentrat nicht oder mit einem Faktor von 1,5 oder 2 mit Wasser verdünnt und dann mit den feuerverzinkten Stahlblechen (HDG) in Kontakt gebracht. Die unterschiedlichen Schichtgewichte und weitere Schichteigenschaften verdeutlichen, dass die Korrosionsbeständigkeit und andere Eigenschaften Schichtdicken-abhängig sind.

Bei den erfindungsgemäßen Beispielen B5 bis B7 wurde der Gehalt an kationischem Polyurethanharz kontinuierlich ein wenig erhöht. Bei den im Vergleich zum Gehalt an anorganischen Bestandteilen vergleichsweise geringen Zusätzen an kationischem Polyurethanharz ergaben sich erhebliche Unterschiede in den Schichteigenschaften, wie auch die Figuren 1 und 2 verdeutlichen.

Ausgehend von den erfindungsgemäßen Beispielen B5 bis B7 wurde der Gehalt an kationischem Polyurethanharz noch weiter bis zu den erfindungsgemäßen Beispielen B11 und B12 erhöht. Bei den erfindungsgemäßen Beispielen B8 bis B10 wurde die Konzentration des Bades durch entsprechende Verdünnung variiert. Bei den erfindungsgemäßen Beispielen B9, B10, B11, B13 und B14 werden alle strengen Kundenanforderungen erfüllt.

Die erfindungsgemäßen Beispiele B13 bis B16 enthalten zusätzlich noch einen variierten Gehalt an säuretolerantem Acrylat mit einem geringen Anteil an Styrol, die als modifizierte anionische Dispersion latent kationisch ist, mit dem ein kleiner Anteil des Gehalts an kationischer Polyurethandispersion ausgetauscht wird. Erst bei erhöhten Zusätzen dieses Acrylats verschlechterten sich die Eigenschaften der Beschichtung ein wenig.

Auch über Versuche, die hier nicht aufgeführt werden, wurde ermittelt, dass sowohl die "Anorganik", als auch die "Organik" in breitem Rahmen chemisch und von den Verrfahrensbedingungen variiert werden kann, um hervorragende Beschichtungen zu erzeugen.

Zu den Beispielen und Vergleichsbeispielen der Tabelle 2:

Für die Beispiele und Vergleichsbeispiele der Tabelle 2 wurde, wenn nicht anders aufgeführt, wie für die der Tabelle 1 gearbeitet:

Als Polymere/Copolymere dienten säuretolerante, nichtionische oder/und kationische Harze. Für die Versuche wurde ein kationisches Polyurethanharz mit einem Gehalt an Polycarbonatpolyol (MFT ca. - 5 °C, Elastizität bei 100 % ca. 13 MPa, Verlängerung 230 %) sowie ein modifiziertes anionisches Acrylharz (T_{g} ca. 35 °C, MFT ca. 30 °C, relativ hart, da Pendelhärte nach König 70-120 s) verwendet. Ihr Gewichtsverhältnis wird mit "Polymerverhältnis Urethan : Acryl" angegeben. Als Komplexbildner 2 wurde L-(+)-Weinsäure (Hydroxycarbonsäure) eingesetzt, insbesondere zur Optimierung der Homogenität, bzw. Stabilität der Zubereitung während längerer Lagerung und anschließender Applikation. Ohne den Zusatz von Hydroxycarbonsäure war die Stabilität der Zusammensetzungen nicht ausreichend, da leicht eine Phasentrennung und Agglomeratbildung eintrat. Solche Zusammensetzungen ließen sich nicht verwenden (Vergleichsbeispiele VB39 - VB41).

Als "Anorganik" wird die anorganische Zusammensetzung auf Basis der Anmeldung DE 102008000600 A1 (Anorganik-Blend 1) oder auf Basis einer sehr ähnlichen Zusammensetzung verstanden. Deswegen wird hierbei zwischen Anorganik-Blend 1 und Anorganik-Blend 2 unterschieden. Anorganik-Blend 1 ist speziell für den Einsatz auf feuerverzinkten metallischen Oberflächen optimiert. Es enthält einen Gehalt an Verbindungen auf Basis von Monozinkphosphat, Hexafluortitansäure, Komplexbildner 1, Aminosilan und Ammonium. Anorganik-Blend 2 enthält in ähnlichen Mengen wie Anorganik-Blend 1 einen Gehalt an Verbindungen auf Basis von Monozinkphosphat, Hexafluortitansäure, Komplexbildner 1, Molybdat, Aluminium, Mangan, Nitrat und Ammonium. Beim Anorganik-Blend 3 wurde die Hexafluortitansäure der anorganischen Zusammensetzung des Anorganik-Blend 1 durch Hexafluorzirkonsäure ausgetauscht.

Als "Organik" wird die organische Zusammensetzung mit mindestens einem Gehalt an Polymer/Copolymer, Wachs und zugehörigen Additiven verstanden.

Bei den Vergleichsbeispielen VB20/1 und VB20/2 wurden anorganische saure Passivierungsmittel unmodifiziert als Anorganik einbezogen, ohne dass ein Organik-Zusatz zugemischt wurde.

Als Substrate für die erfindungsgemäßen Beispiele B21 - B47 und für die zugehörigen Vergleichsbeispiele wurden feuerverzinkte Bleche (HDG) und elektrolytisch verzinkte Bleche (ZE) verwendet.

Zuerst wurden die Bleche einer Reinigung mit dem alkalischen Reiniger Gardoclean® 5080 der Chemetall GmbH bei einer Konzentration von 25 g/L bei pH 10 bei 60 °C im Spritzen bei 1 bar über 20 s unterzogen.

Danach wurden die gereinigten Bleche zuerst mit Stadtwasser und anschließend mit voll entsalztem Wasser gespült. Die Trocknung des anhaftenden Wassers erfolgte bei 100 °C über ca. 2 Minuten, bis dieses Wasser vollständig verdunstet war.

Die Applikation der erfindungsgemäßen Zusammensetzung auf den gereinigten Blechen erfolgte mit einem Spiralrakel Nr. 3, wobei ein Nassfilm mit einem Schichtgewicht von oft ca. 5 g/m² ausgebildet wurde. Dabei diente die erfindungsgemäße Mischung aus Anorganik und Organik dazu, gleichzeitig eine Konversionsschicht und - offenbar hierauf nur graduell abgestimmt - eine vorwiegend organische Schicht auszubilden.

Die gewünschte Trockenschichtdicke wurde durch Anpassen der Konzentration der flüssigen Zusammensetzung und damit durch Anpassen des Trockenrückstands eingestellt. Sie wurde z.B. mit 20 Gew.-% für ca. 1000 mg/m² Trockenfilm für die Beispiele B21 - B41 und mit 10 Gew.-% für ca. 500 mg/m² Trockenfilm bei den Beispielen B42 - B43 eingestellt.

Der Korrosionsschutz wurde ohne Lackschicht geprüft, einerseits im Salzsprühtest nach DIN EN ISO 2997, andererseits im Schwitzwasserkonstantklima-Test (CH-Test oder früher KK-Test genannt) nach DIN EN ISO 6270-2 CH. Beim Salzsprühtest wurde der Prozentsatz der Flächenkorrosion nach 72 h, 120 h und 240 h bestimmt. Beim CH-Test wurde der Prozentsatz der Flächenkorrosion nach 120 h, 240 h und 480 h Schwitzwasser-Konstant-Klimatest nach DIN EN ISO 6270-2 CH ermittelt.

Die Umformbarkeit von erfindungsgemäß beschichteten Körpern wie z.B. Blechen ist für viele Anwendungen von hoher Bedeutung. Beim Umformen dürfen im außerordentlich dünnen Trockenfilm von oft 0,4 bis 2 µm keine Risse auftreten und darf keine Korrosion erscheinen. Die Umformbarkeit der beschichteten Formkörper wurde in drei Varianten geprüft:
1. Näpfchenzugversuch mit Erichsen-Prüfgerät der Fa. Erichsen Modell 142-20 bei einem Niederhaltedruck von 2500 kp,
2. Näpfchenzugversuch unter diesen Bedingungen und anschließend 24 h Salzsprühtest nach DIN EN ISO 9227,
3. Näpfchenzugversuch unter diesen Bedingungen und anschließend 120 h Schwitzwasserkonstantklima nach DIN EN ISO 6270-2CH.

Die Beispiele B21 bis B30 zeigten eine hervorragende Umformbarkeit. Alle weiteren Beispiele wurden aufgrund weniger guter Eigenschaften des Trockenfilms nicht umfassend geprüft.

Die Lackhaftung wurde im Gitterschnitt-Test nach DIN EN ISO 2409 bei 1 mm geprüft sowie im konisches Dornbiegetest nach DIN EN ISO 6860. Beim Coin-Test wurde eine Münze quer zur Bewegungsrichtung und etwa senkrecht zum beschichteten Substrat gleichmäßig mit Druck gezogen, wobei sich eine gleichmäßig geformte Wölbung ohne Absplitterungen ergeben sollte. Dieser Test ist nicht standardisiert, aber in der Praxis sehr aussagekräftig.

Die Überlackierbarkeit von erfindungsgemäß beschichteten Körpern wie z.B. Blechen ist ebenfalls für viele Anwendungen von hoher Bedeutung. Hierbei können sowohl ungeformte, als auch umgeformte beschichtete Körper überlackiert werden. Die Überlackierbarkeit erwies sich bei einer Urethan-reichen Zusammensetzung als sehr gut, bei einer Acryl-reichen Zusammensetzung jedoch oft als schlecht. Die Beispiele B21 bis B30 zeigten eine hervorragende Überlackierbarkeit. Alle weiteren Beispiele wurden aufgrund weniger guter Eigenschaften des Trockenfilms nicht umfangreich geprüft.

Die resultierende Trockenfilmdicke der unter den gleichen Bedingungen auf elektrolytisch verzinkten Substratoberflächen applizierten Beispiele war aufgrund der größeren Oberflächenrauheit der metallisierten Substrate geringfügig höher als bei feuerverzinktem Stahl.

Die Resistenz gegen Reiniger wurde mit dem flüssigen alkalischen Reiniger Gardoclean® S 5102 der Chemetall GmbH bei 25 g/L, pH 10 und 65 °C über 120 s durch Ermitteln der Gewichtsdifferenz vor und nach dem Reinigen bestimmt.

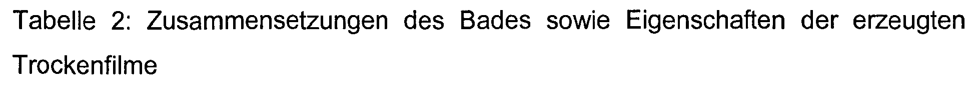

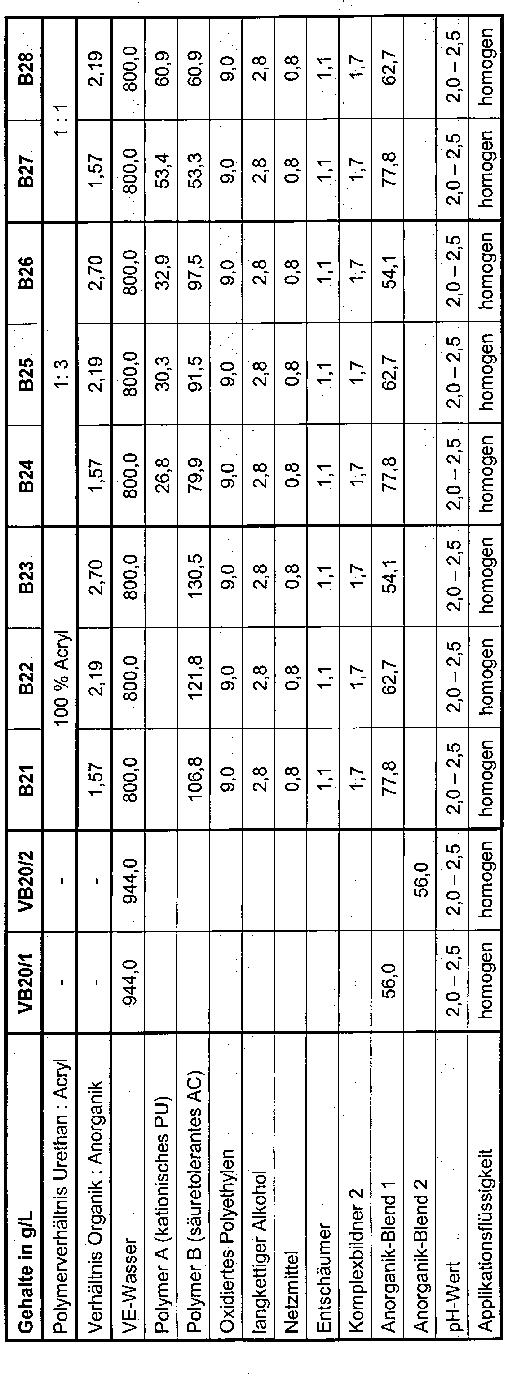

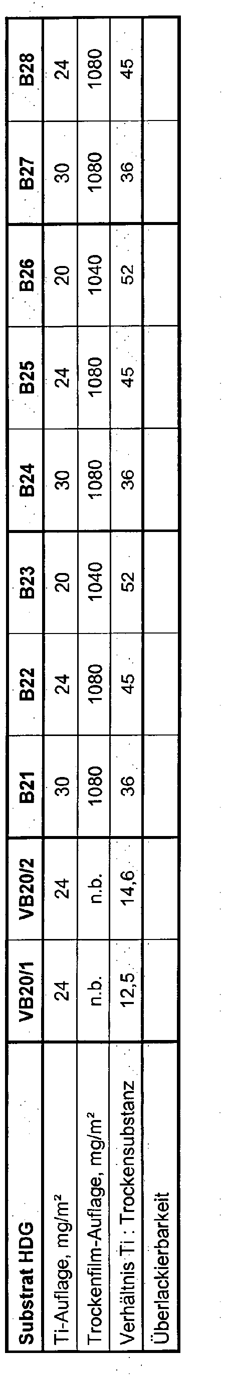

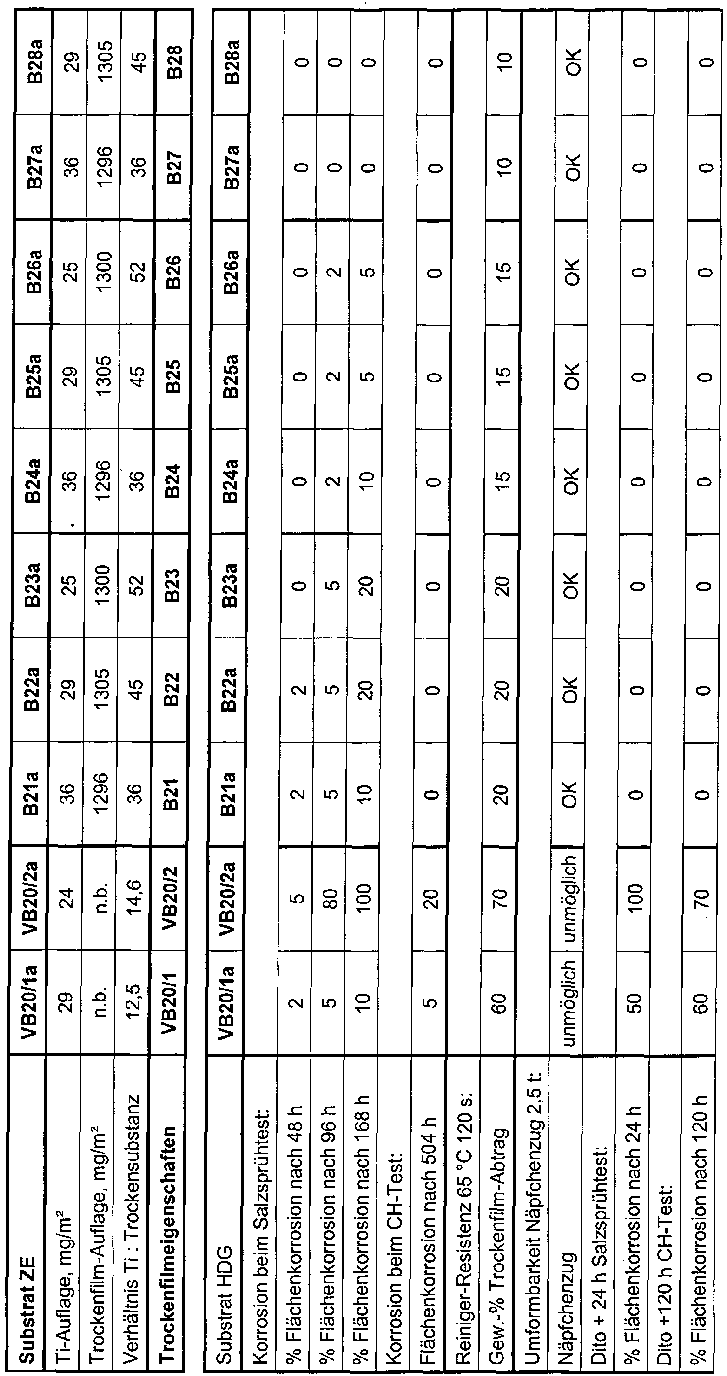

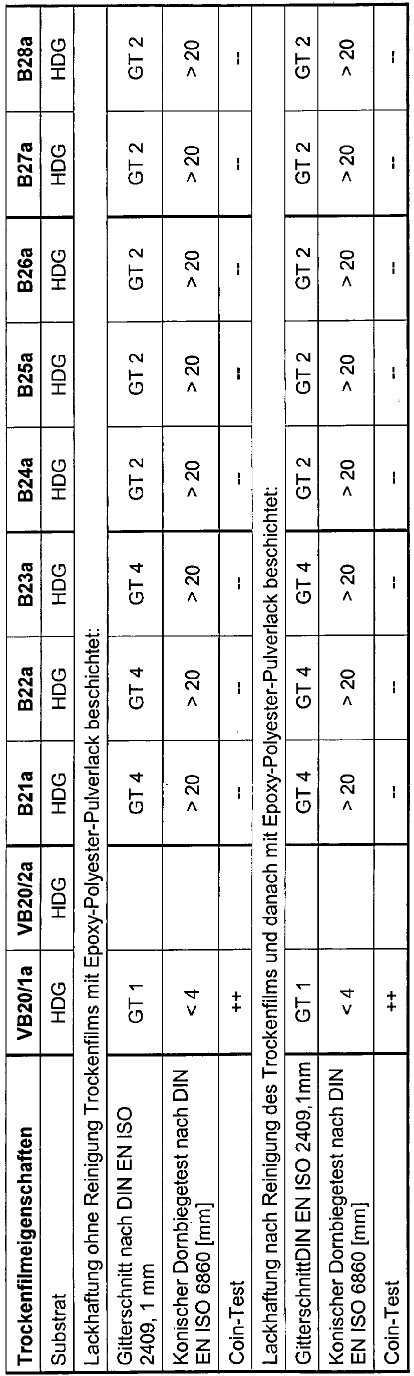

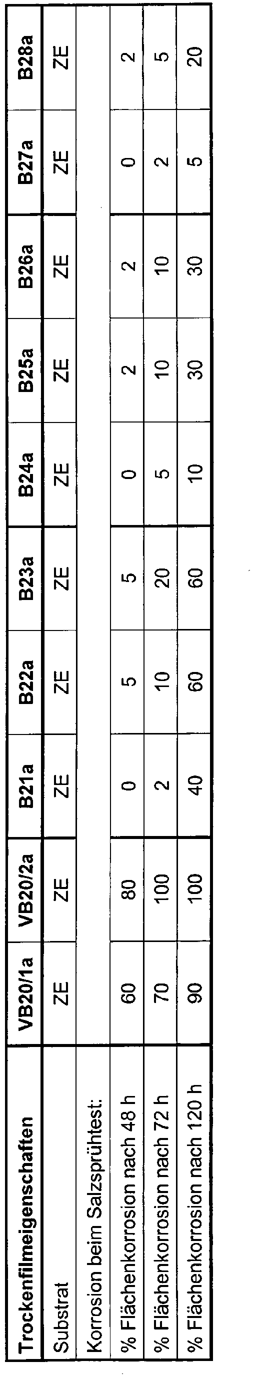

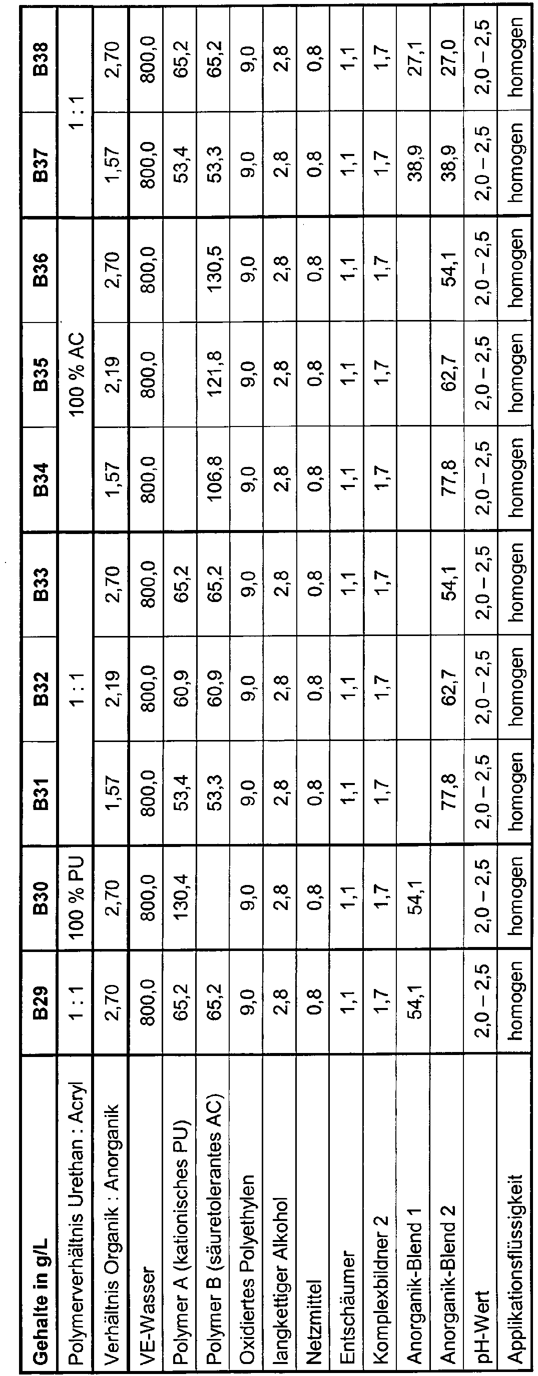

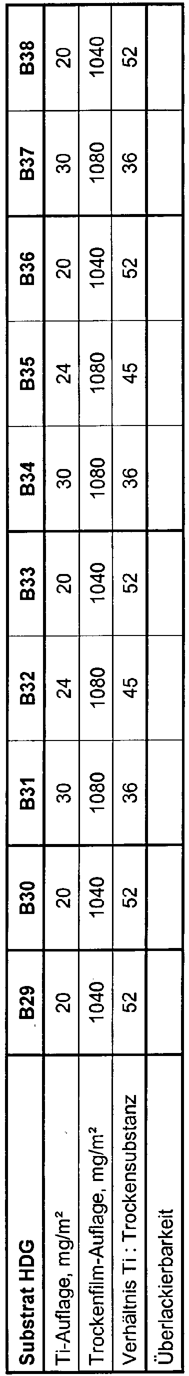

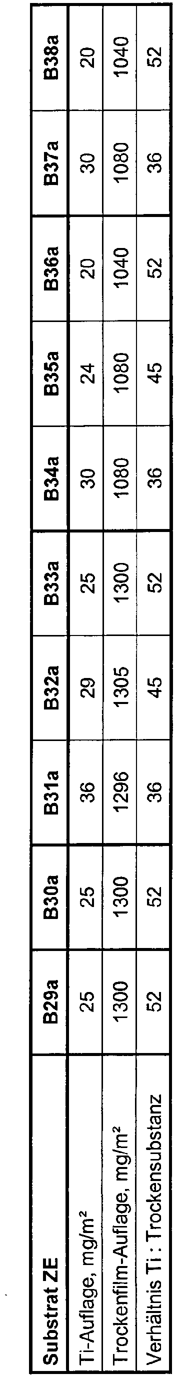

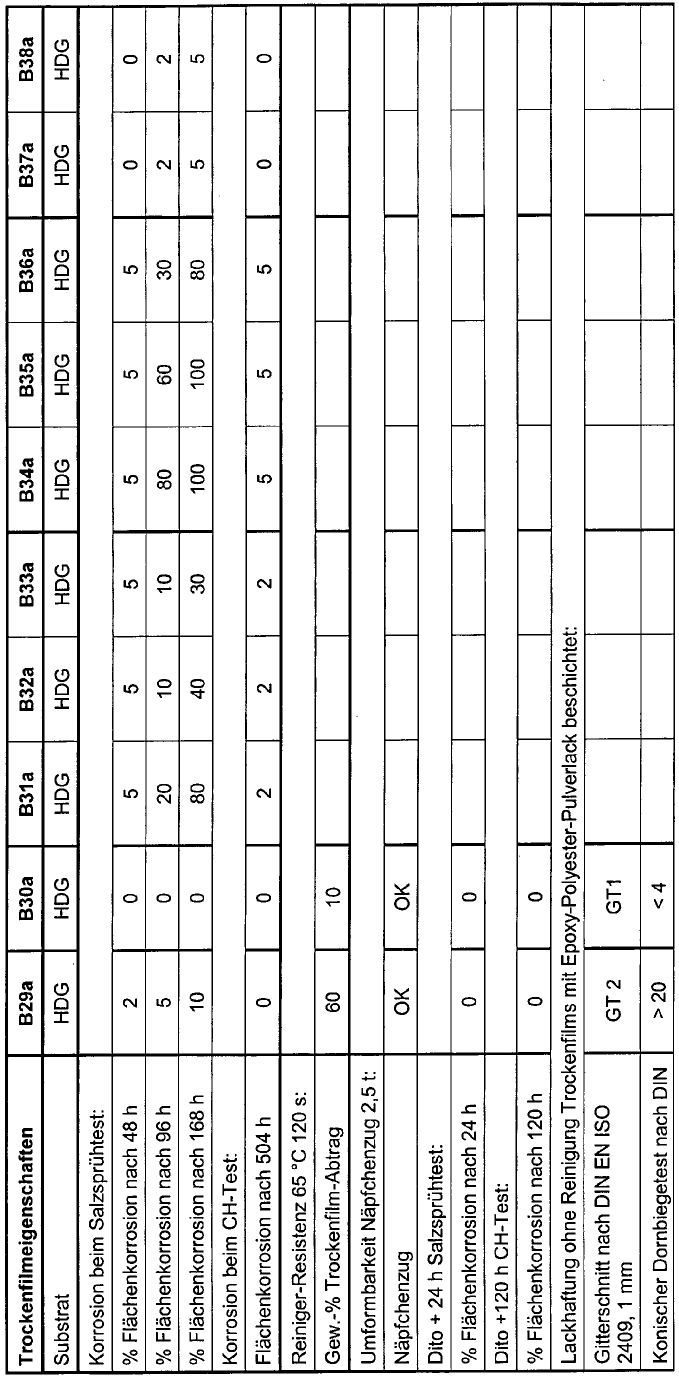

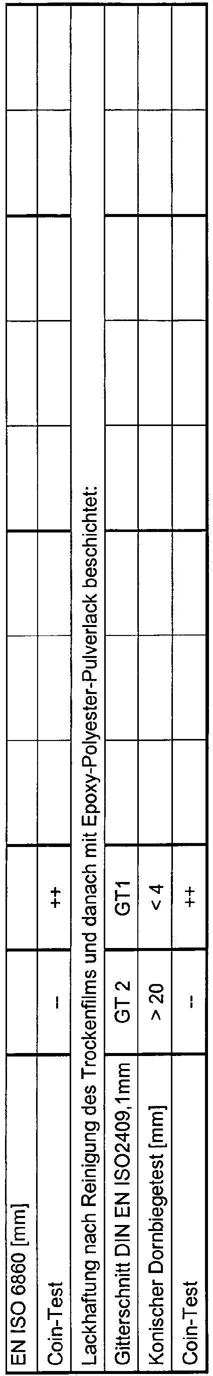

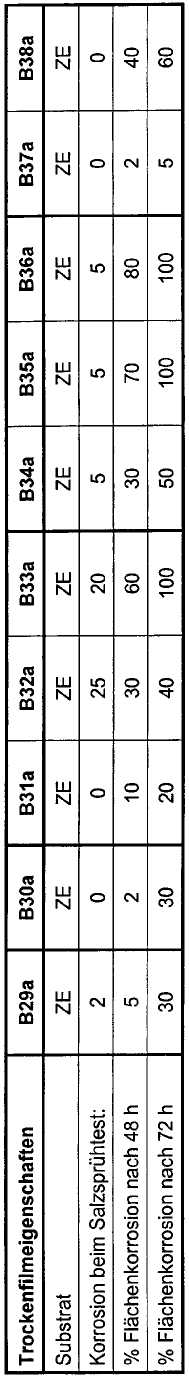

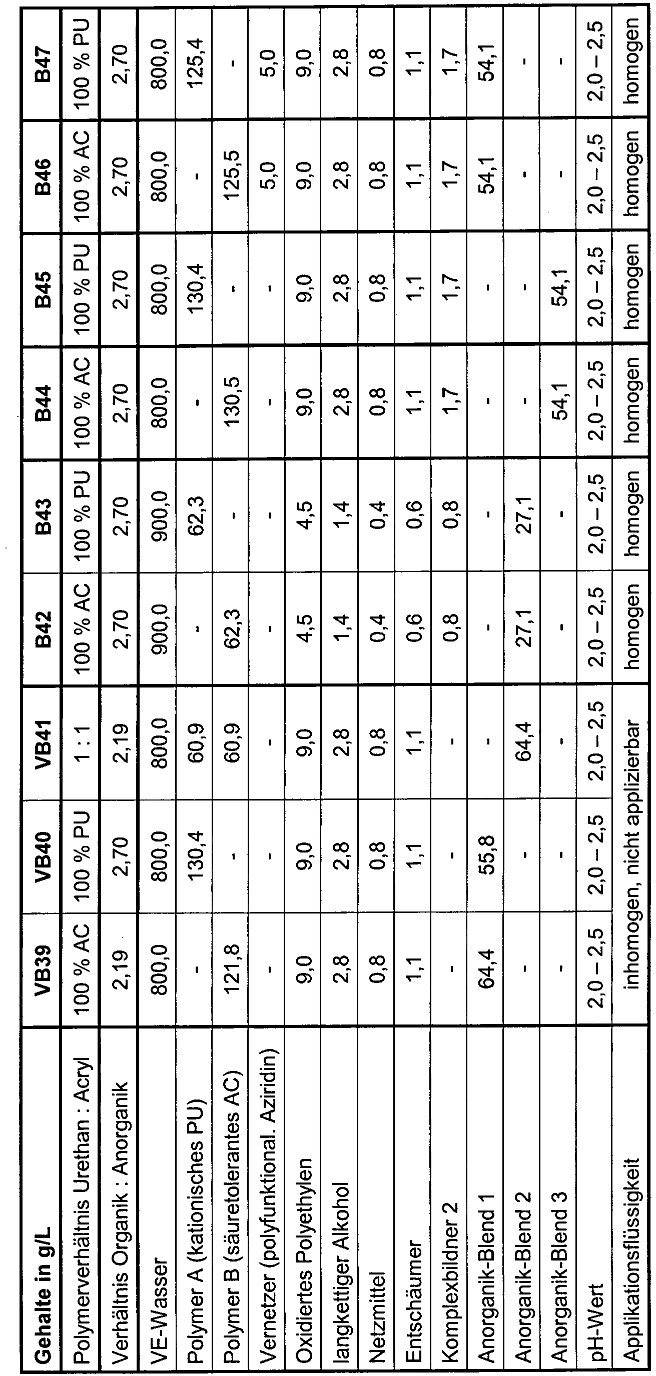

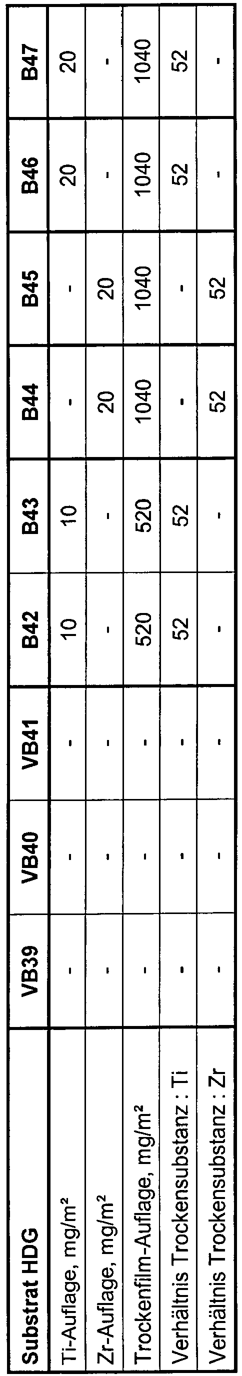

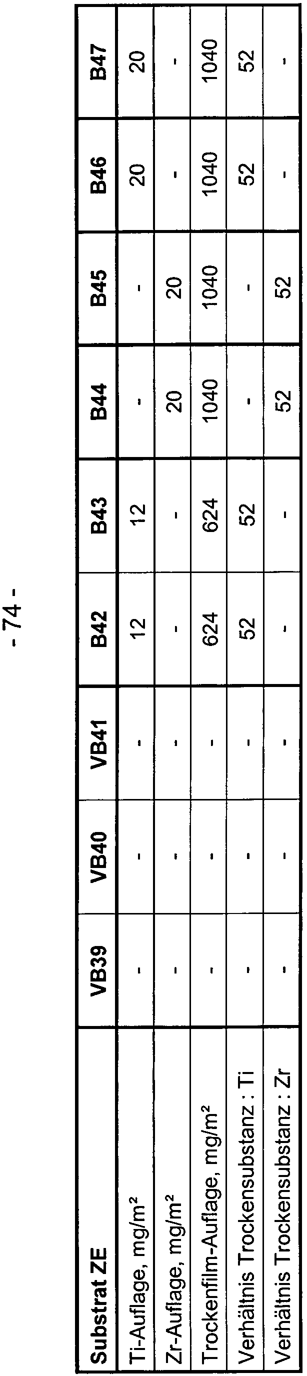

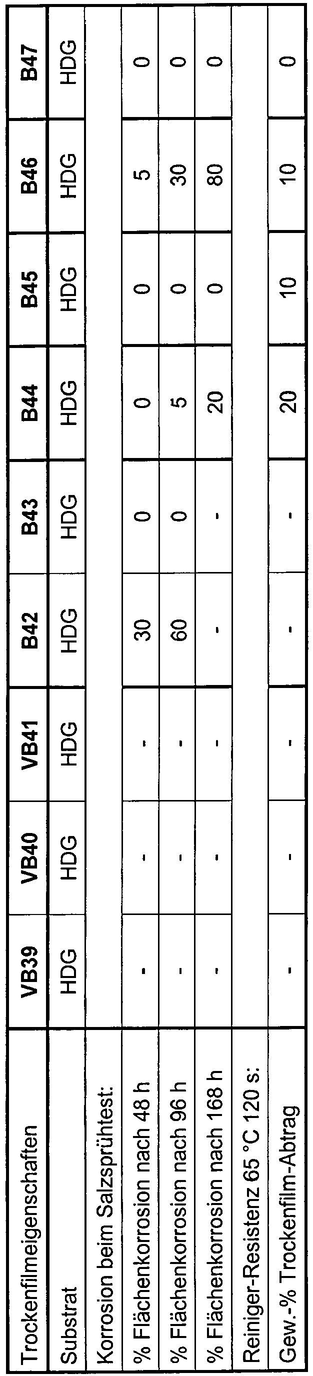

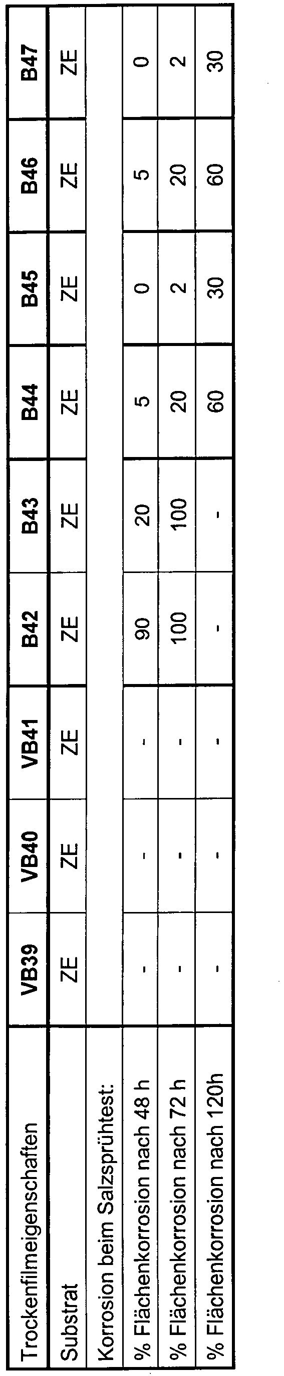

Die erfindungsgemäßen Zusammensetzungen haben sich als saure Zubereitungen mit pH-Werten insbesondere im Bereich von 1,5 bis 3 als hervorragend geeignet erwiesen für die Beschichtung von Substraten aus reinem Zink, aus ZinkTitan-Legierungen, aus feuerverzinktem Stahl und aus elektrolytisch verzinktem Stahl.

Wenn kein Komplexbildner 2 oder insgesamt nicht genügend Komplexbildner zugesetzt wurde, konnte es bei diesen sauren Zusammensetzungen leicht zu Ausfällungen und Inhomogenitäten kommen, so dass sich kein geeigneter Film applizieren ließ (VB39-VB41).

Aufgrund des Beizeffektes wird eine chemische Reaktion der Behandlungsflüssigkeit mit der Substratoberfläche während der Applikation und Trocknung erzielt. Dadurch werden optimale Korrosionsschutz -Eigenschaften unter Beibehaltung der optimalen Substratästhetik erreicht.

Ein Verhältnis von Polymer/Copolymer e) + Wachs f) zu Anorganik a) bis d) etwa im Bereich von (2 bis 2,5) : 1 hat sich für die Mehrheit an Eigenschaften der erfindungsgemäßen Beschichtungen als Optimum erwiesen.

Es ergab sich bei allen Versuchen, dass ein gewisser Gehalt an Ti oder/und an Zr notwendig ist. Denn möglicherweise ist es notwendig, eine dünne Schicht auf Basis von Ti oder/und Zr auf dem metallischen Substrat auszubilden. Es hat sich als wesentlich gezeigt, dass die Auflage an Ti oder/und Zr gerechnet als Metall im Bereich zwischen 15 und 50 oder zwischen 20 und 40 mg/m² liegt, bestimmt mit Röntgenfluoreszenzanalyse. Wenn die Auflage geringer ist, kann der Korrosionsschutz beeinträchtigt sein. Wenn die Auflage höher ist, ist der Beizangriff oft zu hoch oder der Chemikalienverbrauch oft unnötig hoch.

Es hat sich als vorteilhaft und teilweise sogar als notwendig erwiesen, mit der erfindungsgemäßen Zusammensetzung einen Beizeffekt auf der metallischen Oberfläche auszuüben. Denn wenn der Beizeffekt durch die Zusammensetzung zu gering ist, dann ist der Korrosionsschutz oft zu gering. Wenn der Beizeffekt durch die Zusammensetzung zu hoch ist, dann werden zu viele Kationen der metallischen Oberfläche von der wässerigen Zusammensetzung und der zu erzeugenden Beschichtung aufgenommen, wobei letztere einen geringeren Korrosionsschutz aufweisen kann.

Teilweise hat sich gezeigt, dass die erfindungsgemäße Zusammensetzung umso stabiler und langlebiger ist, je kleiner ihr pH-Wert ist. Wenn jedoch eine besonders stabile Zusammensetzung hergestellt wird, ist darauf zu achten, dass der Beizeffekt der Zusammensetzung nicht zu stark wird, so dass gegebenenfalls eine Pufferung z.B. mit Ammoniak oder/und mit einem Amin erfolgt.

Während der anorganische Anteil der Zusammensetzung ("Anorganik" einschließlich deren Zusätzen) wichtig ist, um einen Beizeffekt und eine möglicherweise oxidische erste dünne Schicht auf Basis von Ti oder/und Zr auf dem metallischen Substrat auszubilden, ist der organische Anteil der Zusammensetzung ("Organik" einschließlich Gleitmittel und weiteren Zusätzen) wichtig, um eine geschlossene, gleitfähige, korrosionsresistente Beschichtung auszubilden.

Der Zusatz eines Filmbildungshilfsmittels ist in vielen Ausführungsvarianten für die gute homogene Ausbildung der Beschichtung hilfreich. Es wird insbesonders für harte Harze zugesetzt, um diese temporär zu erweichen.

Ein Zusatz von mindestens einem Silan/Silanol/Siloxan hat sich weder für die Anorganik, noch für die Organik als notwendig erwiesen, ist jedoch in manchen Zusammensetzungen hilfreich. Ein solcher Zusatz kann insbesondere beim Beschichten von Aluminium-reichen Oberflächen vorteilhaft sein.

Ein Zusatz an mindestens einem Korrosionsinhibitor wie z.B. Molybdat kann zusätzlichen Korrosionsschutz gewähren.

Es wurde bei allen erfindungsgemäßen Proben eine hohe Feuchtigkeitsresistenz der Trockenfilme erzielt, wenn nach der Applikation noch wenige Stunden bis zu ihrem Einsatz oder bis zum Test der Feuchtigkeitsresistenz gewartet wurde. Die Feuchtigkeitsresistenz ergab sich dann aufgrund weiterer Nachreaktion nach dem Aufheizen oder/und Trocknen.

Für ein gutes Antifingerprint-Verhalten der erfindungsgemäßen Beschichtung ist oft ein Schichtgewicht von mindestens 1000 mg/m² oder sogar von mindestens 1200 mg/m² erforderlich und oft ein höherer Anteil an Polymer/Copolymer erforderlich. Insbesondere ein erhöhter Gehalt an säuretolerantem kationischen Polyurethan hat sich für ein gutes Antifingerprint-Verhalten und für eine gute Überlackierbarkeit der erfindungsgemäßen Beschichtung als hilfreich erwiesen.

Im Vergleich der erfindungsgemäßen Beschichtungen auf EZ und HDG wurden auf ZinkAluminium-Legierungen wie z. B. Galvalume® und Galfan® alle erforderlichen Eigenschaften erzielt, jedoch mit Ausnahme einer guten ästhetischen Sichtbarkeit des Korngefüges, da es bei diesen Legierungen ohne nachfolgende Lackierung zu Graufärbungen kam.

## Patentansprüche

1. Verfahren zum Beschichten von metallischen Oberflächen mit einer wässerigen Zusammensetzung mit einem pH-Wert im Bereich von 1 bis 4, die
a) mindestens 1 g/L an Phosphat berechnet als PO₄,
b) mindestens 0,1 g/L an mindestens einer Titan- oder/und ZirkoniumVerbindung berechnet als Ti-Metall,
c) mindestens 0,1 g/L an mindestens einem Komplexbildner,
d) mindestens 0,5 g/L an Kationen von Aluminium, Chrom(III) oder/ und Zink oder/und an mindestens einer Verbindung mit einem Gehalt an Aluminium, Chrom(III) oder/und Zink sowie
e) 1 bis 500 g/L an einer kationischen Polyurethan-reichen Dispersion mit einem Gehalt an Polycarbonat oder/und an einer Dispersion auf Basis von Acrylat oder/und Styrol
enthält, bei dem die Zusammensetzung ein Gewichtsverhältnis an organischen Polymeren/Copolymeren e) mit dem anorganischen Passivierungsmittel auf Basis von a) bis d) im Bereich von 8 : 1 bis 0,2 : 1 aufweist, bei dem in der wässerigen Zusammensetzung keine Ausfällungen auftreten und bei dem die Beschichtung nach dem Auftragen verfilmt wird.

2. Verfahren nach Anspruch 1, **dadurch gekennzeichnet, dass** das organischen Polymer/Copolymer e) eine Mindestfilmbildungstemperatur MFT im Bereich von -20 bis +100 °C oder der hiermit gebildete Film eine Transformationstemperatur T_{g} im Bereich von -10 bis +120 °C oder/und eine Pendelhärte nach König im Bereich von 10 bis 140 s aufweist.

3. Verfahren nach einem der vorstehenden Ansprüche, **dadurch gekennzeichnet, dass** die Zusammensetzung ein Gewichtsverhältnis an organischen Polymeren/Copolymeren e) mit dem anorganischen Passivierungsmittel auf Basis von a) bis d) mit im Bereich von 6 : 1 bis 0,8 : 1 aufweist.

4. Verfahren nach einem der vorstehenden Ansprüche, **dadurch gekennzeichnet, dass** die Zusammensetzung einen Gesamtgehalt an Kationen von Aluminium, Chrom(III) oder/und Zink oder/und mindestens eine Verbindung mit einem Gehalt an Aluminium, Chrom(III) oder/und Zink im Bereich von 0,5 bis 80 g/L berechnet als Metall enthält.

5. Verfahren nach einem der vorstehenden Ansprüche, **dadurch gekennzeichnet, dass** die Zusammensetzung einen Gesamtgehalt an Kationen von Eisen oder/und Mangan oder/und mindestens eine Verbindung mit einem Gehalt an Eisen oder/und Mangan im Bereich von 0,1 bis 20 g/L berechnet als Metall enthält.

6. Verfahren nach einem der vorstehenden Ansprüche, **dadurch gekennzeichnet, dass** die Zusammensetzung einen Gehalt an Phosphat im Bereich von 1 bis 250 g/L berechnet als PO₄ enthält.

7. Verfahren nach einem der vorstehenden Ansprüche, **dadurch gekennzeichnet, dass** die Zusammensetzung einen Gesamtgehalt an mindestens einem Komplexbildner im Bereich von 0,1 bis 60 g/L enthält.

8. Verfahren nach einem der vorstehenden Ansprüche, **dadurch gekennzeichnet, dass** die Zusammensetzung einen Gesamtgehalt an mindestens einer Titan- oder/und Zirkoniumverbindung auf Basis von Komplexfluorid im Bereich von 1 bis 200 g/L enthält berechnet als jeweilige Verbindung.

9. Verfahren nach einem der vorstehenden Ansprüche, **dadurch gekennzeichnet, dass** die Zusammensetzung einen Gehalt an freiem Fluorid F_{frei} im Bereich von 0,01 bis 5 g/L oder/und einen Gehalt an Gesamtfluorid F_{gesamt} im Bereich von 0,5 bis 80 g/L enthält.

10. Verfahren nach einem der vorstehenden Ansprüche, **dadurch gekennzeichnet, dass** die Zusammensetzung einen Gehalt an mindestens einem Silan/Silanol/Siloxan/Polysiloxan im Bereich von 0,1 bis 50 g/L enthält, berechnet auf Basis von Si-Metall.

11. Verfahren nach einem der vorstehenden Ansprüche, **dadurch gekennzeichnet, dass** die Zusammensetzung mindestens eine anorganische Verbindung in Partikelform auf Basis von Al₂O₃, SiO₂, TiO₂, ZnO, ZrO₂, Ruß oder/und Korrosionsschutzpartikeln enthält, die einen mittleren Partikeldurchmesser kleiner 300 nm gemessen unter einem Rasterelektronenmikroskop aufweisen.

12. Verfahren nach einem der vorstehenden Ansprüche, **dadurch gekennzeichnet, dass** als metallische Oberfläche solche auf Basis von Aluminium, Eisen, Magnesium, Titan, Zink oder/und Zinn mit der wässerigen Zusammensetzung behandelt werden, insbesondere Teile, Bänder oder/und Bleche.

13. Wässerige Zusammensetzung nach einem der Ansprüche 1 bis 11.

14. Beschichtete metallische Komponente hergestellt nach einem Verfahren nach einem der Ansprüche 1 bis 12.

15. Verwendung der nach dem Verfahren gemäß den Ansprüchen 1 bis 12 beschichteten metallischen Komponenten im Fahrzeugbau, als Architekturelemente im Bauwesen oder zur Fertigung von Geräten und Maschinen wie z.B. elektrotechnische Geräte oder Haushaltsgeräte.

## Claims

1. A method for coating metallic surfaces with an aqueous composition having a pH in the range from 1 to 4 and comprising
a) at least 1 g/L of phosphate, calculated as PO₄,
b) at least 0.1 g/L of at least one titanium compound or/and zirconium compound, calculated as Ti metal,
c) at least 0.1 g/L of at least one complexing agent,
d) at least 0.5 g/L of cations of aluminum, chromium(III) or/and zinc or/and of at least one compound containing aluminum, chromium(III) or/and zinc, and
e) 1 to 500 g/L of a cationic, polyurethane-rich dispersion containing polycarbonate or/and of a dispersion based on acrylate or/and styrene,
in which the composition has a weight ratio of organic polymers/copolymers e) to the inorganic passivating agent based on a) to d) in the range from 8:1 to 0.2:1, in which no instances of precipitation occur in the aqueous composition, and in which the coating is filmed following application.

2. The method according to claim 1, wherein the organic polymer/copolymer e) has a minimum film-forming temperature MFFT in the range from -20 to +100°C or the film formed therewith has a transformation temperature T_{g} in the range from -10 to +120°C or/and a König pendulum hardness in the range from 10 to 140 s.

3. The method according to either of the preceding claims, wherein the composition has a weight ratio of organic polymers/copolymers e) to the inorganic passivating agent based on a) to d) in the range from 6:1 to 0.8:1.

4. The method according to any of the preceding claims, wherein the composition comprises a total amount of cations of aluminum, chromium(III) or/and zinc or/and at least one compound containing aluminum, chromium(III) or/and zinc in the range from 0.5 to 80 g/L, calculated as metal.

5. The method according to any of the preceding claims, wherein the composition comprises a total amount of cations of iron or/and manganese or/and at least one compound containing iron or/and manganese in the range from 0.1 to 20 g/L, calculated as metal.

6. The method according to any of the preceding claims, wherein the composition comprises an amount of phosphate in the range from 1 to 250 g/L, calculated as PO₄.

7. The method according to any of the preceding claims, wherein the composition comprises a total amount of at least one complexing agent in the range from 0.1 to 60 g/L.

8. The method according to any of the preceding claims, wherein the composition comprises a total amount of at least one titanium compound or/and zirconium compound based on complex fluoride in the range from 1 to 200 g/L, calculated as respective compound.

9. The method according to any of the preceding claims, wherein the composition comprises an amount of free fluoride F_{free} in the range from 0.01 to 5 g/L or/and an amount of total fluoride Fₜₒₜₐₗ in the range from 0.5 to 80 g/L.

10. The method according to any of the preceding claims, wherein the composition comprises an amount of at least one silane/silanol/siloxane/polysiloxane in the range from 0.1 to 50 g/L, calculated on the basis of Si metal.

11. The method according to any of the preceding claims, wherein the composition comprises at least one inorganic compound in particle form on the basis of Al₂O₃, SiO₂, TiO₂, ZnO, ZrO₂, carbon black or/and corrosion protection particles which have an average particle diameter of less than 300 nm as measured under a scanning electron microscope.

12. The method according to any of the preceding claims, wherein metallic surfaces treated with the aqueous composition are those based on aluminum, iron, magnesium, titanium, zinc or/and tin, more particularly parts, strips or/and sheets.

13. An aqueous composition according to any of claims 1 to 11.

14. A coated metallic component produced by a method according to any of claims 1 to 12.

15. The use of the metallic components coated by the method according to claims 1 to 12 in vehicle construction, as architectural elements in building, or for the fabrication of appliances and machines such as, for example, electrical appliances or household appliances.

## Revendications

1. Procédé de revêtement de surfaces métalliques avec une composition aqueuse ayant un pH dans la plage allant de 1 à 4, qui contient :
a) au moins 1 g/l de phosphate calculé en tant que PO₄,
b) au moins 0,1 g/l d'au moins un composé de titane et/ou de zirconium calculé en tant que Ti métal,
c) au moins 0,1 g/l d'au moins un complexant,
d) au moins 0,5 g/l de cations aluminium, chrome (III) et/ou zinc et/ou d'au moins un composé ayant une teneur en aluminium, chrome (III) et/ou zinc, et
e) 1 à 500 g/l d'une dispersion riche en polyuréthane cationique ayant une teneur en polycarbonate et/ou d'une dispersion à base d'acrylate et/ou de styrène,
selon lequel la composition présente un rapport en poids entre les polymères/copolymères organiques e) et l'agent de passivation inorganique à base de a) à d) dans la plage allant de 8:1 à 0,2:1, selon lequel aucune précipitation n'a lieu dans la composition aqueuse et selon lequel le revêtement forme un film après l'application.

2. Procédé selon la revendication 1, **caractérisé en ce que** le polymère/copolymère organique e) présente une température filmogène minimale MFT dans la plage allant de -20 à +100 °C ou le film formé avec celui-ci présente une température de transformation T_{g} dans la plage allant de -10 à +120 °C et/ou une dureté au pendule selon König dans la plage allant de 10 à 140 s.

3. Procédé selon l'une quelconque des revendications précédentes, **caractérisé en ce que** la composition présente un rapport en poids entre les polymères/copolymères organiques e) et l'agent de passivation inorganique à base de a) à d) dans la plage allant de 6:1 à 0,8:1.

4. Procédé selon l'une quelconque des revendications précédentes, **caractérisé en ce que** la composition présente une teneur totale en cations aluminium, chrome (III) et/ou zinc et/ou en au moins un composé ayant une teneur an aluminium, chrome (III) et/ou zinc dans la plage allant de 0,5 à 80 g/l, calculée en tant que métal.

5. Procédé selon l'une quelconque des revendications précédentes, **caractérisé en ce que** la composition présente une teneur totale en cations fer et/ou manganèse et/ou en au moins un composé ayant une teneur en fer et/ou en manganèse dans la plage allant de 0,1 à 20 g/l, calculée en tant que métal.

6. Procédé selon l'une quelconque des revendications précédentes, **caractérisé en ce que** la composition présente une teneur en phosphate dans la plage allant de 1 à 250 g/l, calculée en tant que PO₄.

7. Procédé selon l'une quelconque des revendications précédentes, **caractérisé en ce que** la composition présente une teneur totale en au moins un complexant dans la plage allant de 0,1 à 60 g/l.

8. Procédé selon l'une quelconque des revendications précédentes, **caractérisé en ce que** la composition présente une teneur totale en au moins un composé de titane et/ou de zirconium à base de fluorure complexe dans la plage allant de 1 à 200 g/l, calculée en tant que composé respectif.

9. Procédé selon l'une quelconque des revendications précédentes, **caractérisé en ce que** la composition présente une teneur en fluorure libre F_{libre} dans la plage allant de 0,01 à 5 g/l et/ou une teneur en fluorure total Fₜₒₜₐₗ dans la plage allant de 0,5 à 80 g/1.

10. Procédé selon l'une quelconque des revendications précédentes, **caractérisé en ce que** la composition présente une teneur en au moins un silane/silanol/siloxane/polysiloxane dans la plage allant de 0,1 à 50 g/l, calculée sur la base de Si métal.

11. Procédé selon l'une quelconque des revendications précédentes, **caractérisé en ce que** la composition contient au moins un composé inorganique sous forme particulaire à base d'Al₂O₃, de SiO₂, de TiO₂, de ZnO, de ZrO₂, de noir de carbone et/ou de particules anticorrosion, qui présentent un diamètre de particule moyen inférieur à 300 nm, mesuré sous un microscope électronique à balayage.

12. Procédé selon l'une quelconque des revendications précédentes, **caractérisé en ce qu'**en tant que surface métallique, des surfaces métalliques à base d'aluminium, de fer, de magnésium, de titane, de zinc et/ou d'étain sont traitées avec la composition aqueuse, notamment des pièces, des bandes et/ou des tôles.

13. Composition aqueuse selon l'une quelconque des revendications 1 à 11.

14. Composant métallique revêtu fabriqué par un procédé selon l'une quelconque des revendications 1 à 12.

15. Utilisation des composants métalliques revêtus par le procédé selon les revendications 1 à 12 dans la construction d'automobiles, en tant qu'éléments architecturaux dans le bâtiment ou pour la fabrication d'appareils et de machines, tels que p. ex. des appareils électrotechniques ou des appareils ménagers.
